# EUROPÄISCHE PATENTANMELDUNG

(11) **EP 4 711 134 A2**
(43) Veröffentlichungstag der Anmeldung: **18.03.2026**
(21) Anmeldenummer: 26151953.2
(22) Anmeldetag: 02.03.2020
(51) Int. Cl.: B33Y 50/02

(54) **STEUERVERFAHREN, STEUERUNGSEINRICHTUNG UND HERSTELLUNGSVORRICHTUNG**

(30) Priorität: 04.03.2019 DE 102019001522
(62) Teilanmeldung aus: 20708079.7
(71) Anmelder: Nikon SLM Solutions AG, 23560 Lübeck (DE)
(72) Erfinder: Hoppe, Andreas, 23560 Lübeck (DE); Thiel, Christiane, 23560 Lübeck (DE); Otte, Ann-Kathrin, 23560 Lübeck (DE); Brück, Daniel, 23560 Lübeck (DE); Wilkes, Jan, 23560 Lübeck (DE); Schwarze, Dieter, 23560 Lübeck (DE)
(74) Vertreter: Schicker, Silvia

(57) **Zusammenfassung**

Steuerverfahren zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens, bei dem ein verfestigbares Material zur Herstellung des dreidimensionalen Werkstücks schichtweise auf einer Oberfläche eines Trägers aufgebracht wird und das verfestigbare Material in einer jeweiligen Schicht an jeweiligen Auftreffstellen der mehreren Strahlen auf dem verfestigbaren Material durch die mehreren Strahlen verfestigt wird, wobei die Auftreffstellen der Strahlen zur Verfestigung selektiver Bereiche einer der Schichten des verfestigbaren Materials zur Herstellung des dreidimensionalen Werkstücks jeweils im Wesentlichen entgegen einer Gasströmungsrichtung einer Gasströmung über die Oberfläche des Trägers gesteuert werden; wobei das Steuerverfahren umfasst: (a) Unterteilen des zu verfestigenden Materials in der jeweiligen Schicht in mindestens zwei Sektionen, wobei sich zwei der mindestens zwei Sektionen in Gasströmungsrichtung der über den zwei der mindestens zwei Sektionen vorherrschenden Gasströmung zumindest teilweise hintereinander erstrecken, (b) Unterteilen mindestens einer der zwei der mindestens zwei Sektionen in mindestens zwei Flächenstücke, (c) Zuweisen jedes der Flächenstücke zu genau einem bestimmten Strahl, der das zu verfestigende Material in dem zugewiesenen Flächenstück verfestigt, (d) Steuern der Auftreffstellen der Strahlen derart, dass zu wenigstens einem Zeitpunkt einer Belichtung des zu verfestigenden Materials das zu verfestigende Material in wenigstens zwei Flächenstücken verfestigt wird, und ein Netz aus zwischen jedem Mittelpunkt der Auftreffstellen zu jedem anderen Mittelpunkt der Auftreffstellen verlaufender Geraden zu keinem Zeitpunkt der Belichtung, in dem sich alle Mittelpunkte der Auftreffstellen außerhalb eines vorbestimmten Abstandes zueinander befinden, eine Gerade parallel der Gasströmungsrichtung der über den zwei der mindestens zwei Sektionen vorherrschenden Gasströmung aufweist.

## Beschreibung

Die Erfindung betrifft ein Steuerverfahren zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens. Ferner betrifft die Erfindung ein Computerprogramm, das in eine programmierbare Steuerungseinrichtung ladbar ist, mit einem Programmcode, um zumindest einen Teil eines Steuerverfahrens gemäß der vorliegenden Erfindung auszuführen, wenn das Computerprogramm auf der Steuerungseinrichtung ausgeführt wird. Ferner betrifft die Erfindung einen Datenträger, der das Computerprogramm enthält. Ferner betrifft die Erfindung eine Steuerungseinrichtung zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens. Ferner betrifft die Erfindung eine Herstellungsvorrichtung zur Herstellung eines dreidimensionalen Werkstücks mittels eines generativen Schichtbauverfahrens.

Bei generativen Verfahren zur Herstellung dreidimensionaler Werkstücke und insbesondere bei generativen Schichtbauverfahren ist es bekannt, ein Rohstoffpulver schichtweise auf einen Träger, der mit einer Bewegungseinrichtung vertikal höhenverstellbar ist, aufzutragen und durch ortsspezifisches Bestrahlen z. B. durch Verschmelzen oder Versintern zu verfestigen, um letztendlich ein Werkstück einer gewünschten Form zu erhalten. Das Bestrahlen kann mittels elektromagnetischer Strahlung, insbesondere Laserstrahlung, oder Teilchenstrahlung erfolgen. Ist eine Werkstückschicht verfestigt, wird der höhenverstellbare Träger um eine Schichtdicke vertikal abgesenkt und eine neue Schicht aus unverarbeitetem Rohstoffpulvermaterial auf die bereits hergestellte Werkstückschicht aufgebracht. Hierzu können bekannte Beschichteranordnungen oder Pulverauftragsvorrichtungen verwendet werden. Anschließend erfolgt eine erneute Bestrahlung der nun obersten und noch unverarbeiteten Rohstoffpulverschicht. Folglich wird das Werkstück sukzessive Schicht für Schicht aufgebaut, wobei jede Schicht eine Querschnittsfläche und/oder eine Kontur des Werkstücks definiert. In diesem Zusammenhang ist es ferner bekannt, auf CAD- oder vergleichbare Werkstückdaten zurückzugreifen, um die Werkstücke im Wesentlichen automatisch herzustellen.

Bekannte Vorrichtungen zur Herstellung von dreidimensionalen Werkstücken werden beispielsweise in der EP 2 961 549 A1 und in der EP 2 878 402 A1 beschrieben.

Mehrstrahlsysteme werden unter anderem in der WO 2018/172080 A1 beschrieben.

Aufgabe der Erfindung ist es, ein Steuerverfahren bereitzustellen, das die Scan-Strategie einer Multistrahlenvorrichtung verbessert. Insbesondere liegt der Erfindung die Aufgabe zugrunde, ein Steuerverfahren zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens bereitzustellen, das eine gleichmäßige Auslastung aller Strahlenquellen bzw. Optiken bewerkstelligt, eine Kollision von Rauchfahnen mit Strahlen vermeidet und verhindert, dass Spritzpartikel des zu verfestigenden Materials mit eingeschmolzen werden.

Diese Aufgabe wird durch ein Steuerverfahren, eine Steuerungseinrichtung sowie eine Herstellungsvorrichtung gemäß den unabhängigen Ansprüchen gelöst. Bevorzugte Ausführungsformen hiervon werden in den abhängigen Ansprüchen geschildert.

Das offenbarte Steuerungsverfahren muss nicht für jede Schicht des verfestigbaren Materials, bzw. des Bauteils, angewendet werden, sondern kann auch nur wenige (d.h. eine vorbestimmte Anzahl von) Schichten oder sogar nur auf eine einzige Schicht angewendet werden. Insbesondere wenn in der Schicht nur (sehr) wenige und/oder sehr kleine Bereiche (d.h. Bereiche mit einem vorbestimmten maximalen Ausmaß) zu verfestigenden Materials vorgesehen sind, wie beispielsweise bei sehr filigranen Bauteilabschnitten oder bei Stützkörpern, kann eine Anwendung des Verfahrens entfallen. Im Sinne der Erfindung wird also auch eine Anwendung auf einzelne Schichten als eine Anwendung des Steuerverfahrens verstanden. Bevorzugt wird das Verfahren jedoch für alle Schichten des zu verfestigenden Materials, bzw. des Bauteils, angewendet.

Die vorliegende Offenbarung beschreibt ein Steuerverfahren zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens, bei dem ein verfestigbares Material zur Herstellung des dreidimensionalen Werkstücks schichtweise auf einer Oberfläche eines Trägers aufgebracht wird und das verfestigbare Material in einer jeweiligen Schicht an jeweiligen Auftreffstellen der mehreren Strahlen auf dem verfestigbaren Material durch die mehreren Strahlen verfestigt wird, wobei die Auftreffstellen der Strahlen zur Verfestigung selektiver Bereiche einer der Schichten des verfestigbaren Materials zur Herstellung des dreidimensionalen Werkstücks jeweils im Wesentlichen entgegen einer Gasströmungsrichtung einer Gasströmung über die Oberfläche des Trägers gesteuert werden; wobei das Steuerverfahren umfasst:
(a) Unterteilen des zu verfestigenden Materials in der jeweiligen Schicht in mindestens zwei Sektionen, wobei sich zwei der mindestens zwei Sektionen in Gasströmungsrichtung der über den zwei der mindestens zwei Sektionen vorherrschenden Gasströmung zumindest teilweise hintereinander erstrecken,
(b) Unterteilen mindestens einer der zwei der mindestens zwei Sektionen in mindestens zwei Flächenstücke,
(c) Zuweisen jedes der Flächenstücke zu genau einem bestimmten Strahl, der das zu verfestigende Material in dem zugewiesenen Flächenstück verfestigt,
(d) Steuern der Auftreffstellen der Strahlen derart, dass zu wenigstens einem Zeitpunkt einer Belichtung des zu verfestigenden Materials das zu verfestigende Material in wenigstens zwei Flächenstücken verfestigt wird, und ein Netz aus zwischen jedem Mittelpunkt der Auftreffstellen zu jedem anderen Mittelpunkt der Auftreffstellen verlaufender Geraden zu keinem Zeitpunkt der (aktuellen, zum Beispiel während einer vorbestimmten zeitlichen Periode) Belichtung, in dem sich alle Mittelpunkte der Auftreffstellen außerhalb eines vorbestimmten Abstandes (z.B. des Unbehelligungsabstandes, wie unten definiert) zueinander befinden, eine Gerade parallel der Gasströmungsrichtung der über den zwei der mindestens zwei Sektionen vorherrschenden Gasströmung aufweist.

Hierbei können die Sektionen verschiedene Formen aufweisen. In manchen Ausführungsformen umfassen die Sektionen Spalten, die sich im Wesentlichen senkrecht zur Gasströmungsrichtung der Gasströmung erstrecken, d.h. die Schicht des zu verfestigenden Materials wird in mindestens zwei Spalten unterteilt, wobei sich die Spalten im Wesentlichen senkrecht zur Gasströmungsrichtung der Gasströmung erstrecken. Die Anzahl und/oder Lage und/oder Form der Sektionen kann dabei durch die Optickonfiguration der Maschine, bspw. durch die Anzahl und/oder Bearbeitungsbereiche der Strahlen zur Verfestigung des Materials, bestimmt sein. Alternativ oder zusätzlich kann die Anzahl und/oder Lage und/oder Form der Sektionen auch durch Beobachtungsbereiche einer oder mehrerer Sensoren und/oder durch Lage und/oder Form und/oder durch eine gewünschte Qualität der Bauteilgeometrie in der zu verfestigenden Schicht oder der daraus resultierenden Vektoren, anhand welcher die Strahlen zur Verfestigung des Materials über die Materialschicht gelenkt werden, beeinflusst sein. Hierzu kann beispielsweise auch die Winkelauslenkung der Scannerspiegel und/oder die eingebrachte Laserleistung und/oder eine hinnehmbare Beeinflussung durch Schmauchkegel und/oder die Lage von Merging-Regionen von Hatch-Vektoren und/oder eine Bauzeitoptimierung berücksichtigt werden. Eine solche im Wesentlichen senkrecht zur Gasströmungsrichtung der Gasströmung erstreckende Ausrichtung der Spalten bzw. Sektionen ist im Allgemeinen jedoch nicht zwingendermaßen notwendig, sondern kann grundsätzlich auch freiformen aufweisen. Es ist zusätzlich oder alternativ möglich, dass eine Sektion eine andere Sektion umschließt und/oder dass eine Sektion aus mehreren nicht zusammenhängenden Flächen gebildet ist. Die wenigstens zwei Sektionen sind jedoch dadurch bestimmt, dass diese sich aus Blick der Gasströmungsrichtung zumindest teilweise hinterschneiden. Durch die Hinterschneidung ergibt sich zumindest zwischen zwei Feldern, die in jeweils unterschiedlichen Sektionen liegen, eine Beziehung hinsichtlich der Beeinflussung der Bearbeitung eines Feldes durch den durch die Bearbeitung des anderen Feldes erzeugten Schmauchkegel.

Die Grenzen zwischen zwei Sektionen können einen gewissen Toleranzbereich aufweisen. Dies kann insbesondere dazu dienen, bei einer Einteilung von Flächenstücken anhand von einer Vektorverteilung auf der Bauteilgeometrie Mikrovektoren zu vermeiden. Es kann also ggf. ein Flächenstück bis zu einem gewissen Maß (z.B. bis zu einer vorbestimmten maximalen Überlapplänge und/oder bis zu einer vorbestimmten maximalen Flächengröße) in eine andere Sektion hineinreichen.

Innerhalb eines in dieser Schrift als Unbehelligungsabstand bezeichneten Abstands, wird die gegenseitige Beeinflussung zweier Bearbeitungsstrahlen durch deren Schmauch und/oder Spritzer in einem bestimmten Maße nicht überschritten. Der Unbehelligungsabstand kann als generelles Maß in der Steuerung implementiert oder für den konkreten Bauauftrag bestimmt werden. Der Unbehelligungsabstand kann abhängig sein vom Bauteilmaterial und/oder der eingebrachten Laserleistung (d.h. Spotgröße und/oder Form der Belichtungsstelle und/oder Laserleistung pro Fläche und/oder Wellenlänge und/oder Vorschubgeschwindigkeit und/oder Auftreffwinkel zwischen Strahl und Pulveroberfläche) der beiden Laserstrahlen und/oder der gewünschten Bauteilqualität. Bei der Verwendung von mehreren Strahlen mit unterschiedlichen Strahlparametern kann der Unbehelligungsabstand für jede Strahlkombination zueinander unterschiedlich sein. Innerhalb dieses definierten Unbehelligungsabstands dürfen in manchen Ausführungsformen zwei Strahlen auch gleichzeitig in Gasströmungsrichtung hintereinander arbeiten.

Als Abführungsabstand wird in dieser Schrift ein weiterer Abstand definiert, welcher für die gegenseitige Beeinflussung der Bearbeitung zweier Strahlen zueinander relevant ist. Als Abführungsabstand wird der Abstand verstanden, über welchen durch die Bearbeitung entstehende Spritzer durch den Gasstrom von der Bearbeitungsstelle mindestens wegbefördert werden, bevor Sie wieder in der Ebene des Baufeldes niedergehen, d.h. bevor Sie im Pulverbett landen. Dieser Abstand unterscheidet sich vom Unbehelligungsabstand. Während der Unbehelligungsabstand eine Beeinflussung des durch eine Bestrahlung des zu verfestigenden Materials entstehenden Schmauchs und Spritzer im Strahlengang des Bearbeitungsstrahls berücksichtigt, d.h. v.A. eine Defokussierung und/oder Blockade der Strahlung, berücksichtigt der Abführungsabstand die Beeinflussung durch die im Pulverbett niedergegangenen Spritzer. Dieser Abstand ist zum einen abhängig von der Spritzerneigung der aktuellen Bearbeitung, d.h. vom Baumaterial sowie den Parametern der eingebrachten Laserleistung (Spotgröße, Laserleistung pro Fläche, Wellenlänge, Vorschubgeschwindigkeit, Auftreffwinkel zwischen Strahl und Pulveroberfläche), als auch andererseits von den Strömungsbedingungen der am Ort der Bearbeitung herrschenden Gasströmung. Der Abführungsabstand kann als global einheitlicher Wert hinterlegt werden oder für jeden Bearbeitungsstrahl definiert werden. Weiter ist es auch möglich, dass der Abführungsabstand in Abhängigkeit eines oder mehrerer der genannten Parameter für jeden Bestrahlungsort auf dem zu verfestigenden Material separat bestimmt wird. Bei einer optimalen Gasführung in der Multistrahlenvorrichtung ist der Abführungsabstand an allen Orten des Baufeldes unendlich, d.h. es werden alle Spritzer von der Gasströmung so abgeführt, dass keine Spritzer auf das Baufeld niedergehen. In manchen Ausführungsformen ist der Abführungsabstand aber größer als der Unbehelligungsabstand. Da an Stellen des Baufeldes, welche in Gasströmungsrichtung außerhalb des Abführungsabstandes von bereits bearbeiteten Stellen potenziell Spritzer niedergegangen sein können, welche die Bestrahlung der Stelle und somit die Bauteilqualität negativ beeinflussen können, sollte eine Bestrahlung dort in manchen Ausführungsformen bevorzugt nicht erfolgen. Die Reihenfolge der Bestrahlung des zu verfestigenden Materials ist demnach bevorzugt so zu steuern, dass die Auftreffstellen der Strahlen in Gasströmungsrichtung stets innerhalb eines Abführungsabstands zu bereits bearbeiteten Stellen des zu verfestigenden Materials in der jeweiligen Schicht geführt werden. Besonders bevorzugt werden die Strahlen jedoch so gesteuert, dass die Auftreffstellen der Strahlen generell nur entgegen der Gasströmungsrichtung zu bereits bearbeiteten Stellen des zu verfestigenden Materials in der jeweiligen Schicht geführt werden.

Eine Strahlungsquelle kann hierbei durch dem Fachmann bekannte Optiken (z.B. Strahlteiler) zur Erzeugung mehrerer Strahlen genutzt werden. Alternativ wird ein Strahl durch eine jeweilige Strahlungsquelle erzeugt.

Die jeweiligen Auftreffstellen der mehreren Strahlen können unterschiedlich sein, oder zumindest zum Teil identisch sein und/oder sich überlappen.

In manchen Ausführungsformen wird vor der Zuweisung der Flächenstücke zu genau einem bestimmten Strahl jedes der Flächenstücke durch dessen Lage zur Oberfläche des Trägers und/oder zu einem Gasstromauslass der Gasströmung einem oder mehreren bestimmten Strahlen der mehreren Strahlen zugeordnet. Somit kann vorteilhaft ein bestimmter Bereich nur durch einen oder mehrere Strahlen bestrahlt werden, deren Auftreffwinkel beim Auftreffen auf das zu verfestigende Material in einem bestimmten Winkelbereich liegen.

In manchen Ausführungsformen werden die Auftreffstellen der Strahlen zumindest teilweise kontinuierlich über die Oberfläche des Trägers gesteuert.

In manchen Ausführungsformen befinden sich mindestens zwei der Mittelpunkte der Auftreffstellen für mindestens eine vorbestimmte Dauer außerhalb des vorbestimmten Abstandes zueinander. In manchen Ausführungsformen befinden sich alle Mittelpunkte der Auftreffstellen für mindestens die vorbestimmte Dauer außerhalb des vorbestimmten Abstandes zueinander. Hierdurch kann die Schicht effizient auf verschiedenen Bereichen bestrahlt werden.

In manchen Ausführungsformen werden eine Lage und/oder eine Ausdehnung der Sektionen auf der Oberfläche des Trägers und/oder eine Anzahl der Sektionen definiert basierend auf: einer Ausdehnung und/oder Lage des dreidimensionalen Werkstücks in der Schicht des verfestigbaren Materials, und/oder einer Lage von Scanfeldern der Strahlen, die über Punkte senkrechter Strahleneinfälle und eine Ausdehnung mit Bezug auf die Oberfläche des Trägers und/oder einen Winkel zur Achse des jeweiligen senkrechten Strahleinfalls konfiguriert werden. Hierdurch kann vorteilhaft insbesondere die Effizienz der Herstellung des dreidimensionalen Werkstücks gesteigert werden und ein bestimmter Bereich nur durch einen oder mehrere Strahlen bestrahlt werden, deren Auftreffwinkel beim Auftreffen auf das zu verfestigende Material in einem bestimmten Winkelbereich liegen.

In manchen Ausführungsformen werden alle Sektionen in Richtung senkrecht zur Gasströmungsrichtung der Gasströmung mit derselben Ausdehnung definiert. Alternative oder zusätzlich werden alle Sektionen in Gasströmungsrichtung der Gasströmung mit derselben Ausdehnung definiert. Durch diese Gleichverteilung kann die Effizienz zur Herstellung des dreidimensionalen Werkstücks erhöht werden, da insbesondere eine Gleichverteilung bei der Zuordnung von Sektionen zu bestimmten Strahlen gewährleistet werden kann.

In manchen Ausführungsformen wird die Belichtung eines jeden Flächenstücks in einer zweiten Sektion, welche sich in Gasströmungsrichtung wenigstens teilweise vor einer anderen ersten Sektion erstreckt, erst begonnen, nachdem das zu verfestigende Material aller Flächenstücke der ersten Sektion vollständig bestrahlt wurde. Hierdurch kann vorteilhaft gewährleistet werden, dass die Belichtung der zweiten Sektion keine Auswirkungen hat auf das Material, das in der ersten Sektion schon belichtet wurde. Die Qualität des dreidimensionalen Werkstücks kann hierdurch erhöht werden.

In manchen Ausführungsformen wird eine jede Auftreffstelle so gesteuert, dass diese sich nicht in Gasströmungsrichtung außerhalb eines Abführungsabstandes zu einer Stelle befindet, an welcher das zu verfestigende Material der jeweiligen Schicht bereits bestrahlt wurde. Hierdurch kann gewährleistet werden, dass Spritzer, die während einer Belichtung eines bestimmten Bereiches entstehen, nur in einem anderen Bereich landen, der schon belichtet wurde. Somit wird bewerkstelligt, dass Spritzer in einer bestimmten Schicht nicht belichtet werden. Die Qualität des dreidimensionalen Werkstücks kann somit erhöht werden.

In manchen Ausführungsformen wird die Anzahl von Flächenstücken, in die die entsprechende Sektion unterteilt wird, basierend auf einer Ausdehnung der Sektion senkrecht zur Gasströmungsrichtung der Gasströmung und/oder einer Lage der Sektion in der Schicht des verfestigbaren Materials definiert. So können z.B. in schmalen Bauteilbereichen des herzustellenden dreidimensionalen Werkstücks weniger Strahlen zum Einsatz kommen und die entsprechende Sektion oder Sektionen können auf weniger Strahlen aufgeteilt werden.

In manchen Ausführungsformen wird eine Anzahl von Flächenstücken in einer Sektion durch eine Anzahl der maximal zum gleichen Zeitpunkt in der Sektion belichtenden Strahlen oder deren Vielfaches definiert. Hierdurch kann die Effizienz der Herstellung des dreidimensionalen Werkstücks erhöht werden, insbesondere da sämtliche Strahlen gleichzeitig zur Belichtung des zu verfestigbaren Materials genutzt werden.

In manchen Ausführungsformen werden die Flächenstücke in einer Sektion im Wesentlichen in gleich große Flächenstücke unterteilt. In manchen Ausführungsformen wird hierbei jede Spalte in äquidistante Stücke entsprechend der Anzahl von Strahlen bzw. in gleich große Flächenstücke unterteilt. In jedem dieser Stücke können die Vektoren dem entsprechenden Strahl zugewiesen werden. Dadurch kann eine gleichmäßige Auslastung der Strahlen erreicht werden.

In manchen Ausführungsformen entspricht die vorbestimmte Anzahl von Flächenstücken jeder der Sektionen einer Anzahl der mehreren Strahlen.

In manchen Ausführungsformen wird jedes der Flächenstücke, das einem bestimmten Strahl der mehreren Strahlen zugeordnet ist, in mehrere Bestrahlungsfelder basierend auf einem Strahlendurchmesser und/oder dessen maximalen Auslenkwinkel des bestimmten Strahls aufgeteilt. Dies führt zu einer besonders gleichmäßigen Auslastung der Strahlen und kann insbesondere bei Herstellanlagen mit Optikkonfigurationen, welche eine Aufweitung eines Strahldurchmessers, bspw. mit einer Zoom-Optik, aufweisen, eingesetzt werden.

In manchen Ausführungsformen wird ein geschlossener Konturzug zur Herstellung einer Kontur des dreidimensionalen Werkstücks unabhängig von der Lage des Konturzugs in den Flächenstücken einem oder mehreren Strahlen, insbesondere nur einem Strahl, zugeordnet. Insbesondere kann ein geschlossener Konturzug zur Herstellung einer Kontur des dreidimensionalen Werkstücks einem einzigen Strahl zugeordnet werden. Hierdurch kann eine gute Oberflächenqualität des dreidimensionalen Werkstücks (durch möglichst keinen sichtbaren Überlapp) sichergestellt werden. Konturzüge können als separate Flächenstücke eingeteilt werden, welche sich dann vom vorwiegend vorherrschenden Raster deutlich unterscheiden können. Bevorzugt können Konturzüge aber unabhängig von einem das Baufeld überlagernden Raster bearbeitet werden, d.h. die Zuweisung von Konturzügen zu einem Strahl kann unabhängig der Zuteilung von Flächenstücken eines Rasters zu unterschiedlichen Bearbeitungsstrahlen erfolgen. Die Flächenstücke selbst werden weiterhin nach einer angewandten Scanstrategie den Bearbeitungsstrahlen zugeordnet. Eine sich durch die Lagebeziehungen der Flächenstücke zueinander ergebende Beeinflussung sowie eine daraus resultierende Bearbeitungsreihenfolge kann aber für die Bearbeitung der Konturzüge und Flächenstücke dennoch eingehalten werden. Im Sinne der Erfindung wird eine Fläche, deren Flächeninhalt ohne die Anteile von Konturzügen einem ersten Bearbeitungsstrahl zugewiesen ist, und durch welche ein oder mehrere Konturzüge verlaufen, welche einem oder mehreren weiteren Bearbeitungsstrahlen zugeordnet sind, als nur dem ersten Bearbeitungsstrahl zugeordnet verstanden.

In manchen Ausführungsformen wird das zu verfestigende Material in der jeweiligen Schicht mittels eines Rasters oder einer Überlagerung mehrerer Raster in die Flächenstücke aufgeteilt. Bei der Zuordnung von Vektoren einer Schicht zu einem Scansystem innerhalb der Herstellungsanlage zur Herstellung für das dreidimensionale Werkstück muss ein Kompromiss zwischen einer Optimierung hinsichtlich der Bauzeit und der Bauteilqualität erfolgen. Durch das Raster bzw. die Überlagerung mehrerer Raster kann eine Gleichverteilung von Vektoren, insbesondere Hatch-Vektoren über alle verfügbaren Optiken mit synchronisiertem Scan-Fortschritt entgegen der Gasstromrichtung und unter Berücksichtigung von Wechselwirkungen mit dem Schmauch bewerkstelligt werden. Alternativ oder zusätzlich kann bei der Zuordnung beziehungsweise Aufteilung der Vektoren auf die verschiedenen Strahlen (bzw. Strahlenquellen) die Anzahl von Vektoren in Betracht gezogen werden. Diese Zuordnung kann so gewählt werden, dass die Qualität des herzustellenden dreidimensionalen Objekts optimiert wird. Somit basiert in manchen Ausführungsformen das Unterteilen des zu verfestigbaren Materials der Schicht auf einer Anzahl und/oder Länge von Vektoren, die den jeweiligen Strahlen zugeordnet werden, wobei die Vektoren einen Abtastvorgang der Schicht durch die Strahlen definieren. Alternativ oder zusätzlich kann die Unterteilung auch auf einer Belichtungszeit der jeweiligen Strahlen basieren. Bevorzugt kann bei einer Aufteilung der Vektoren zu Bearbeitungsstrahlen und/oder einer Zuweisung von Flächenstücken eines Rasters zu Bearbeitungsstrahlen, eine Lage der Scanfelder der Scansysteme zum Baufeld so berücksichtigt werden, dass die Bearbeitungsstrahlen sich nicht (oder niemals zumindest für eine vorbestimmte Zeitspanne) kreuzen.

In manchen Ausführungsformen basiert das Unterteilen des zu verfestigenden Materials der Schicht auf einer den jeweiligen Strahlen zugeordneten, insbesondere im Wesentlichen gleichverteilten, Belichtungszeit. Durch eine erhöhte Effizienz der Herstellung des dreidimensionalen Werkstücks kann die gesamt Belichtungszeit reduziert werden.

In manchen Ausführungsformen teilt ein erstes Raster die Schicht in Bereiche auf, die jeweils durch einzelne oder mehrere Strahlen erreicht werden. Die Bereiche werden über Punkte senkrechter Strahleneinfälle und eine Ausdehnung mit Bezug auf die Oberfläche des Trägers und/oder einen Winkel zur Achse des senkrechten Strahleinfalls konfiguriert.

In manchen Ausführungsformen teilt ein zweites Raster das zu verfestigende Material in der jeweiligen Schicht entsprechend einer Vektorausrichtung von Vektoren (z.B. Hatch-Vektoren) der Strahlen (für Hatch-Vektoren in einem Hatch-Muster basierend auf einer Hatch-Distanz und einer Hatch-Rotation des Hatch-Musters) auf, wobei die Vektoren ein Fortschreiten der Strahlen (auf der Trägeroberfläche) definieren. Vektorblöcke können hierbei erhalten bleiben, wobei (Hatch-)Vektoren nicht aufgesplittet werden und keine Mikrovektorisierung stattfindet.

In manchen Ausführungsformen wird eine Region, in der die Vektoren (z.B. Hatch-Vektoren) mergen (d.h. aneinander in Vektorrichtung angrenzen), nicht in verschiedene Sektionen, die verschiedenen Strahlen zugeordnet werden, geteilt. Die Zusammenführung von Feldern kann berücksichtigt werden. Insbesondere kann die Vektorausrichtung der Vektoren in angrenzenden Flächenstücken derart definiert werden, dass Vektoren an den Flächengrenzen nicht aufeinander zulaufen. Vektoren, deren jeweilige Enden aufeinander zeigen und die gleichen x-y-Koordinaten haben, werden somit nicht zur gleichen Zeit von verschiedenen Strahlen abgetastet. Eine Überhitzung und unerwünschte Materialverdampfung können an dieser Position bzw. in diesem Ortsbereich vermieden werden, sodass verhindert werden kann, dass Poren aufgrund eines Tiefschweißeffekts entstehen. Konkret wird eine Merging-Region also bevorzugt nur einem Strahl zugewiesen, sodass eine gleichzeitige Bearbeitung zweier aufeinandertreffender Vektoren ausgeschlossen ist. Besonders bevorzugt werden aufeinander zulaufende Vektoren zusammengeführt, sodass die Merging-Region entfällt.

In manchen Ausführungsformen werden die Sektionen als im Wesentlichen senkrecht zu der Gasströmungsrichtung der Gasströmung verlaufende Spalten ausgebildet, und wobei eine Ausdehnung der jeweiligen Spalte parallel zu der Gasströmungsrichtung der Gasströmung derart definiert wird, dass jede der Spalten eine gleiche Anzahl und/oder eine gleiche Länge an Bearbeitungs-Vektoren und/oder eine gleiche rechnerische Belichtungszeit der Strahlen aufweist. Die Scan-Flächenverteilung kann hierdurch global zur Einteilung des Scan-Fortschritts genutzt werden.

In manchen Ausführungsformen wird wenigstens eine Sektion so in Flächenstücke aufgeteilt, dass eine gleiche Anzahl von für das zu verfestigende Material in jedem Flächenstück nutzbaren Strahlen zum Belichten des Flächenstücks und/oder eine im Wesentlichen gleiche Anzahl an Vektoren (z.B. Hatch-Vektoren) in jedem Flächenstück und/oder eine im Wesentlichen gleiche Summe der Länge der Vektoren in jedem Flächenstück und/oder eine im Wesentlichen gleiche Belichtungszeit in jedem Flächenstück erreicht wird. Zu jedem Flächenstück können Informationen hinsichtlich der nutzbaren Optiken bzw. Strahlen zur Belichtung des jeweiligen Flächenstücks, die Anzahl an (Hatch-)Vektoren und eine Länge der (Hatch-)Vektoren in jedem Flächenstück vorliegen.

In manchen Ausführungsformen wird in wenigstens einer Sektion jedem der Strahlen, dem in der Sektion wenigstens ein Flächenstück zugewiesen wurde, eine gleiche Anzahl und/oder Gesamtlänge an Vektoren (z.B. Hatch-Vektoren) und/oder eine gleiche Belichtungszeit und/oder eine gleiche Anzahl Flächenstücke zugewiesen. Hierdurch kann ein gleichmäßiger Scan-Fortschritt und/oder eine Optimierung (im besten Fall eine annähernde Gleichverteilung) der Scanzeit gewährleistet werden.

Bei Gitterstrukturen kann in manchen Ausführungsformen die Aufteilung basierend auf der Gesamt-Markierdauer und/oder der Gesamt-Markierlänge und/oder der Gesamt-Markieranzahl vorgenommen werden.

In manchen Ausführungsformen umfasst das Steuerverfahren ferner ein Bestimmen, basierend auf einer Bestrahlung des zu verfestigenden Materials in der Schicht in einem ersten Flächenstück mit einem der Strahlen, eines Bereiches mit Bezug auf die Oberfläche des Trägers, in welchem ein Auftreten von Schmauch und/oder Spritzern, die durch die Bestrahlung in dem ersten Flächenstück entstehen, erwartet wird, und ein Bestimmen, basierend auf dem Bereich, in welchem das Auftreten von Schmauch und/oder der Spritzer erwartet wird, ob ein zweites Flächenstück durch den Strahl oder einen anderen Strahl bestrahlt werden kann. Somit kann die Dauer zur Herstellung des dreidimensionalen Werkstücks reduziert werden, wobei gewährleistet wird, dass ein Strahl nicht mit dem Schmauch kollidiert bzw. dass kein Spritzer, der durch einen ersten Strahl hervorgerufen wurde, durch einen anderen Strahl eingeschmolzen wird.

Es ist leicht ersichtlich, dass im Sinne der Erfindung nicht das gesamte Steuerverfahren auf einer in einer Multistrahlenvorrichtung integrierten Steuerungseinrichtung durchgeführt werden muss, sondern auch nur teilweise auf dieser ausgeführt werden kann. Insbesondere ist es möglich, dass Teile des Steuerungsverfahrens beispielsweise an einem herkömmlichen PC-Arbeitsplatz durchgeführt werden können. Die daraus resultierenden Anweisungen für die Multistrahlenvorrichtung können dann zum Beispiel mittels einer Netzwerkverbindung oder einem Datenträger an die Multistrahlenvorrichtung übergeben werden.

In manchen Ausführungsformen umfassen die Strahlen Laserstrahlen, wobei insbesondere alle Strahlen Laserstrahlen sind. Insbesondere umfassen die eine oder die mehreren Strahlungsquellen Laser. Insbesondere weisen alle Laserstrahlen eine im Wesentlichen gleiche Wellenlänge und/oder eine im Wesentlichen gleiche Leistung und/oder eine gleiche, insbesondere punktförmige, Form der Auftreffstelle auf. In manchen Ausführungsformen umfassen die Strahlen wenigstens zwei Laserstrahlen, welche eine unterschiedliche Wellenlänge und/oder eine unterschiedliche Leistung und/oder eine unterschiedliche Form der Auftreffstelle aufweisen.

Die Laserstrahlen können gleich oder unterschiedlich sein, d.h. beispielsweise können wenigstens zwei Laserstrahlen eine unterschiedliche Wellenlänge und/oder eine unterschiedliche Leistung und/oder eine unterschiedliche Bestrahlungsfläche und/oder eine unterschiedliche Geometrie der Bestrahlungsfläche aufweisen. Die Unterschiede können durch eine unterschiedliche strahlformende Optik im Strahlengang der jeweiligen Strahlen erreicht werden und/oder können zumindest einzelne Strahleigenschaften durch unterschiedliche Laserstrahlquellen erreicht werden, so können beispielsweise Festkörperlaser (Scheiben-, Stab- oder Faserlaser), Diodenlaser oder Gaslaser eingesetzt werden.

Ferner wird ein Computerprogramm beschrieben, das in eine programmierbare Steuerungseinrichtung ladbar ist, mit einem Programmcode, um zumindest einen Teil (z.B. vollständig) eines Steuerverfahrens gemäß der vorliegenden Beschreibung auszuführen, wenn das Computerprogramm auf der Steuerungseinrichtung ausgeführt wird.

Ferner umfasst die vorliegende Offenbarung einen Datenträger, der das Computerprogramm enthält, wobei der Datenträger ein elektrisches Signal, ein optisches Signal, ein Funksignal oder computerlesbares Speichermedium umfasst.

Die vorliegende Offenbarung umfasst ferner eine Steuerungseinrichtung zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens, wobei die Steuerungseinrichtung umfasst: einen oder mehrere Prozessoren; und einen Speicher, der Anweisungen enthält, die von dem einen oder den mehreren Prozessoren ausführbar sind, wodurch die Steuerungseinrichtung betreibbar ist, um zumindest das Steuern der Auftreffstellen der Strahlen nach d) (siehe oben) (oder vollständig) das Verfahren gemäß der hierin beschriebenen Ausführungsformen durchzuführen.

Ferner umfasst die vorliegende Offenbarung eine Herstellungsvorrichtung zur Herstellung eines dreidimensionalen Werkstücks mittels eines generativen Schichtbauverfahrens, wobei die Herstellungsvorrichtung umfasst: eine Multistrahlenvorrichtung mit einer oder mehreren Strahlenquellen zur Erzeugung mehrerer Strahlen; und die Steuerungseinrichtung gemäß der hierin beschriebenen Ausführungsformen.

Falls eine Strahlenquelle benutzt wird, können die mehreren Strahlen durch dem Fachmann bekannte Optiken, wie z.B. Strahlenteiler, erzeugt werden.

Aufgrund Ihrer Lagebeziehungen zueinander werden die Begriffe Baufeld, Oberfläche des verfestigbaren oder zu verfestigenden Materials, Materialschicht, Bauteil oder Bauteilschicht, Träger und Pulverbett in Hinblick auf eine Unterteilung synonym verwendet. Es ist leicht zu verstehen, dass eine Aufteilung eines der genannten Dinge auch eine analoge Aufteilung des anderen bewirkt. Wenn also vom Baufeld die Rede ist, ist hiermit also auch die sich im Baufeld befindliche Materialschicht oder dessen Oberfläche, bzw. das dort aufzubauende Bauteil gemeint.

Die Erfindung wird im Folgenden anhand der beigefügten schematischen Figuren näher erläutert, von denen
- Figur 1: eine schematische Skizze einer Scanstrategie zum Scannen einer Schicht zur Herstellung eines dreidimensionalen Werkstücks mithilfe eines generativen Schichtbauverfahrens zeigt,
- Figur 2: eine schematische Skizze einer weiteren Scanstrategie zum Scannen einer Schicht zur Herstellung eines dreidimensionalen Werkstücks mithilfe eines generativen Schichtbauverfahrens zeigt,
- Figur 3: schematische Skizzen von Bauteilgeometrien zeigt,
- Figur 4: eine schematische Skizze einer Lagebeziehung zwischen dem Baufeld und Scanfeldern einer beispielhaften Optikkonfiguration zeigt,
- Figur 5: eine schematische Skizze einer beispielhaften Aufteilung einer Trägerplatte zeigt,
- Figur 6: eine schematische Skizze einer weiteren beispielhaften Aufteilung einer Trägerplatte zeigt,
- Figur 7: eine schematische Skizze einer weiteren Scanstrategie zeigt,
- Figur 8: eine schematische Skizze einer weiteren Scanstrategie zeigt,
- Figur 9: eine schematische Skizze einer Unterteilung einer Schicht zeigt,
- Figur 10: eine schematische Skizze einer Unterteilung einer Schicht gemäß Figur 9 zeigt,
- Figur 11: eine schematische Skizze einer weiteren Unterteilung einer Schicht zeigt,
- Figur 12: eine schematische Skizze eines Schmauchkegels und dessen Beziehung zu einer Unterteilung einer Schichtzeigt,
- Figur 13: eine schematische Skizze einer weiteren Scanstrategie zeigt,
- Figur 14: ein Flussdiagramm eines Steuerverfahrens zeigt,
- Figur 15: ein schematisches Diagramm einer Herstellungsvorrichtung zeigt,
- Figur 16: eine schematische Skizze einer Interaktion eines Lasers mit einer Rauchfahne eines anderen Lasers außerhalb eines Unbehelligungsabstands zeigt,
- Figur 17: eine schematische Skizze einer Interaktion eines Lasers mit einer Rauchfahne eines anderen Lasers innerhalb eines Unbehelligungsabstands zeigt,
- Figur 18: eine schematische Skizze einer weiteren Unterteilung einer Schicht zeigt,
- Figur 19: eine schematische Skizze einer weiteren Unterteilung einer Schicht zeigt,
- Figur 20: eine schematische Skizze einer weiteren Unterteilung einer Schicht zeigt,
- Figur 21: eine schematische Skizze einer Unterteilung einer Schicht mit einer sich von der Mitte des Baufeldes radial nach außen verlaufenden Gasströmung zeigt, und
- Figur 22: eine schematische Skizze einer Bearbeitungsstelle mit dem aus der Position resultierenden Unbehelligungsabstand und Abführungsabstand zeigt.

Die vorliegende Erfindung betrifft insbesondere eine Scanstrategie für eine Multistrahlenvorrichtung, insbesondere für eine Multilaser- Selective Laser Melting-Maschine.

Die hierin beschriebenen Ausführungsformen erreichen, dass eine Rauchfahne eines Bearbeitungsspots nicht in einen anderen Strahl (z.B. Laserstrahl) gelangt (oder umgekehrt, d.h. dass ein Strahl (z.B. Laserstrahl) nicht in eine Rauchfahne gesteuert wird, die durch einen anderen Strahl erzeugt wird).

In manchen Ausführungsformen umfasst die Maschine z.B. 7, 12, 15 oder mehr Laser, wobei eine beliebige andere Anzahl an Lasern genutzt werden kann.

Manche Ausführungsformen bestehen aus einer Strategie, wie diese Scanvektoren auf die verschiedenen Optiken (z.B. Laserstrahlen) einer Multistrahlenmaschine (z.B. Multilasermaschine) aufgeteilt werden können.

Die Beschreibung von Lasern bzw. Laserquellen in der vorliegenden Offenbarung beziehen sich gleichermaßen auf andere Strahlenquellen, wie z.B. Teilchenquellen (z.B. Elektronenstrahlquellen). Sämtliche Ausführungsformen, die in der vorliegenden Beschreibung offenbart werden, sind somit nicht notwendigerweise auf Laser bzw. Laserquellen beschränkt.

Ziele der Aufteilung der Scanvektoren auf verschiedene Optiken sind dabei unter anderem eine gleichmäßige Auslastung aller Laser sowie eine Verhinderung einer Kollision von Rauchfahnen mit Laserstrahlen und eine Verhinderung eines Einschmelzens von Spritzpartikel (basierend auf einer Belichtung gegen die Gasströmung), wobei Wartezeiten zwischen Bestrahlungen verschiedener Bereiche entstehen können. Ein Mindest- und Maximalabstand zwischen den Strahlen kann durch die beschriebenen Ausführungsformen erreicht werden. In manchen Ausführungsformen werden trotz einer gleichen Anzahl von Vektoren pro Strahl unterschiedliche Belichtungszeiten erzielt, sodass nach der Abarbeitung einer Spalte der Breite x und der Länge y, die von den Strahlen erfasst wird, auf ein Signal gewartet werden muss, dass der letzte Vektor in dieser Spalte belichtet wurde. Erst dann wird, in manchen Beispielen, mit der Belichtung der nächstfolgenden Spalte fortgefahren. Hierdurch wird der Maximalabstand zwischen benachbarten Strahlen begrenzt und es kann erforderlich sein, dass die Vektoren in Form einer Spaltenaufteilung in ein Datenregister geschrieben werden.

Bei der Zuordnung von Vektoren einer Schicht (Slice) zu einem Scansystem innerhalb z.B. einer Selective Laser Melting Anlage muss ein Kompromiss zwischen einer Optimierung hinsichtlich der Bauzeit und hinsichtlich der Bauteilqualität erfolgen.

Die Ausführungsformen, die hierin beschrieben werden, erlauben eine zeit- und qualitätsoptimierte Aufteilung von Scanvektoren auf verschiedene Scansysteme in einer Selective Laser Melting Anlage. In manchen Ausführungsformen wird hierzu eine Überlagerung verschiedener Gitter genutzt, um eine Schicht in Felder aufzuteilen, die dann unter dem Gedanken der Gleichverteilung über alle Optiken einer Optik zugewiesen werden können. Hierbei kann jedoch gleichzeitig ein gleichmäßiger Fortschritt entgegen der Gasstromrichtung gewährleistet werden. Dadurch ist die Möglichkeit gegeben, Zeitoptimierungen bei nicht ideal verteilten Herstellungsprozessen durch ein Vorziehen von näher an der Einströmung des Gases liegenden Bereichen zu erreichen, wobei die Qualität des Werkstücks nicht negativ beeinflusst wird (insbesondere durch die Berücksichtigung von Schmauchkegeln).

Für die Konturen des herzustellenden Werkstücks wird eine qualitätsoptimierte Zuweisung von Bereichen der zu verfestigenden Schicht und den Optiken angestrebt. Hierbei können z.B. die Optikbereiche aufgrund der Flächen begrenzt werden, um die Qualität des Werkstücks in diesen Bereichen im Hinblick auf den Auslenkwinkel des Strahls der jeweiligen Optik optimieren zu können. Alternativ oder zusätzlich können geschlossene Konturzüge möglichst wenigen Optiken zugeordnet werden. Hierzu ist es möglich, für die Zuweisung der Konturzüge zu den Bearbeitungsstrahlen, diese unabhängig von der Einteilung der Sektionen und Flächenstücke zu betrachten, und auf die Flächeneinteilung lediglich zur Bestimmung der Bearbeitungsreihenfolge der Flächenstücke und Konturzüge heranzuziehen. Dies stellt eine gute Oberflächenqualität sicher (möglichst kein sichtbarer Überlapp).

Für die Hatches wird eine geschwindigkeitsoptimierte Zuweisung unter Berücksichtigung des gleichmäßigen Scan-Fortschritts aller Optiken entgegen der Gasstromrichtung und unter Vermeidung von Wechselwirkungen von Schmauchkegeln einer Optik und noch zu belichtenden Bereichen angestrebt.

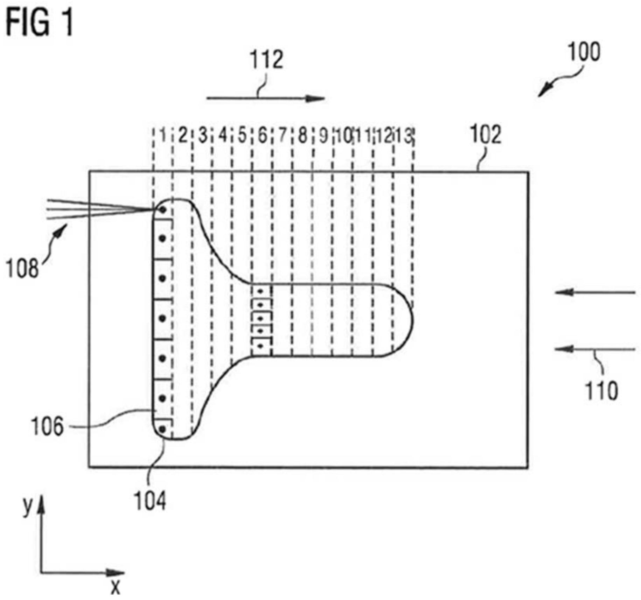

Figur 1 zeigt eine schematische Skizze 100 einer Scanstrategie zum Scannen einer Schicht zur Herstellung eines dreidimensionalen Werkstücks mithilfe eines generativen Schichtbauverfahrens.

Die Skizze zeigt ein in der Bauebene liegendes Baufeld 102, ein Bauteil 104, Laserspots 106, einen Rauchkegel 108, die Richtung der Gasströmung 110 sowie die Richtung 112, in der die Bearbeitung voranschreitet.

Es wird hierbei beispielhaft von einer Maschinenkonfiguration ausgegangen, bei welcher sieben Laserstrahlen, bzw. Belichtungsstellen 106 mittels sieben Scanneroptiken auf das Baufeld 102 gerichtet werden können, wobei jede Scanneroptik auf jede Stelle des Baufelds 102 gerichtet werden kann, d.h. die Scanfelder der Scanneroptiken überlappen sich vollständig.

Die Belichtungsstellen, hier Laserspots 106, werden so gesteuert, dass sie immer etwa in einer Linie angeordnet sind, welche in der Bauebene (x,y) senkrecht zur Gasströmungsrichtung liegt.

Die Bearbeitung schreitet von links nach rechts fort, d. h. gegen die Gasströmung.

Wie in Figur 1 dargestellt, wird die Bauteilschicht (bzw. bei mehreren Bauteilen das Baufeld) in x-Richtung in eine geeignete Zahl an Spalten oder Sektionen (in diesem Beispiel nummeriert von Spalten 1-13) unterteilt. Die Spalten müssen nicht notwendigerweise geradlinig sein, sondern können z.B. an Schachbrettfelder (Vektorblöcken) entlang begrenzt sein, welche um einen Winkel zu den dargestellten Spalten rotiert sein können.

Zusätzlich kann eine Mindestdistanz und/oder eine Maximaldistanz zwischen zwei Laserspots im Algorithmus definiert werden, sodass bei schmalen Bauteilbereichen wie in Figur 1 im rechten Teil des Bauteils nicht alle (in diesem Beispiel 7) Laser zum Einsatz kommen, sondern die Sektionen lediglich auf eine geringere Anzahl an Lasern (z.B. 5 Laser) aufgeteilt werden. Dies kann vorteilhaft sein, um einen zu starken Einfluss von Spritzen auf den benachbarten Laser zu vermeiden und eine lokale Überhitzung durch den Einsatz von mehreren Lasern in einem engen Ortsbereich zu verhindern.

Jede Spalte wird in äquidistante Flächenstücke entsprechend der Anzahl Laser unterteilt. Als äquidistante Flächenstücke werden hier gleich große Flächenstücke verstanden. In jedem dieser Flächenstücke werden die Vektoren dem entsprechenden Laser zugewiesen.

Die Spaltenbreite kann beispielsweise vorab als ein fester Wert gewählt sein oder auch in Abhängigkeit eines vorhandenen Hatch-Musters, welches bspw. als Felder mit Hatch-Vektoren vorliegt, gewählt werden. Insbesondere kann die Spaltenbreite so gewählt werden, dass in den Spalten eine Aufteilung in Felder (gemäß der Anzahl der Strahlquellen) erfolgt, deren Vektorenzahl und/oder deren Vektorlänge und/oder deren Belichtungszeit annähernd gleichverteilt ist. Weiter kann die Spaltenbreite auch in Abhängigkeit einer Minimal- und/oder Maximaldistanz zwischen zwei Laserspots gewählt sein.

Diese Scanstrategie ermöglicht eine sehr einfache Aufteilung der Bauteilschicht, unabhängig von der Bauteilgeometrie und ist auch mit geringer Rechenkapazität in kurzer Zeit zu berechnen. Aufgrund der Spaltenweisen Abarbeitung wird die Beeinflussung eines Laserspots 104 durch einen Rauchkegel 108 eines anderen Laserspots effektiv vermieden. Je nach Bauteilgeometrie wird jedoch im Vergleich zu anderen Strategien mehr Bearbeitungszeit in Anspruch genommen.

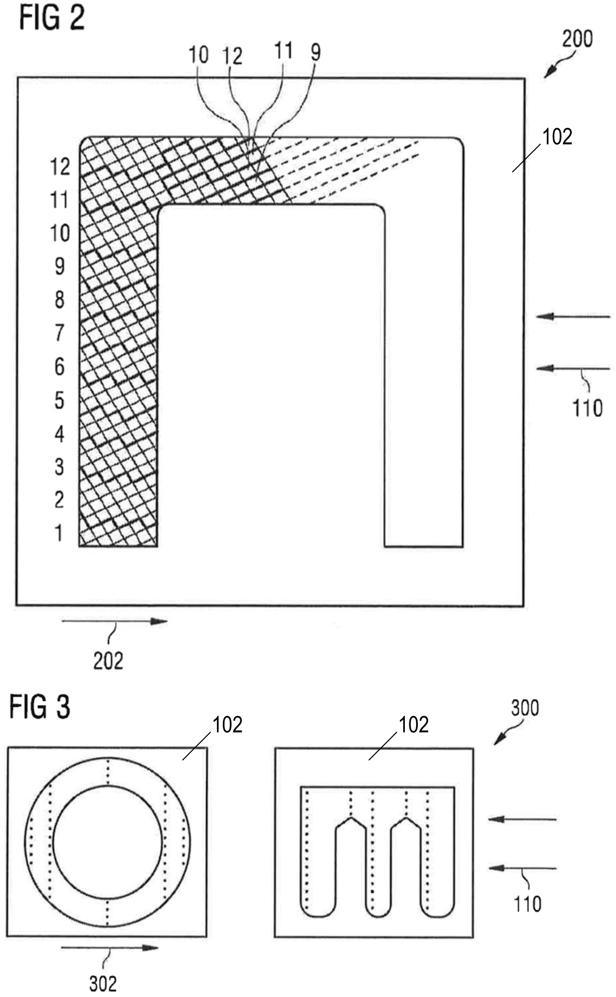

Figur 2 zeigt beispielhaft eine weitere Scanstrategie 200, in der die Gasströmungsrichtung der Gasströmung 110 sowie die Richtung 202 der Bearbeitungsreihenfolge der Schachbrettfelder für jeden der Laser dargestellt wird.

Es wird hierbei beispielhaft von einer Maschinenkonfiguration ausgegangen, bei welcher zwölf Laserstrahlen mittels zwölf Scanneroptiken auf das Baufeld 102 gerichtet werden können, wobei jede Scanneroptik auf eine sich in Bearbeitungsrichtung 202 über die gesamte Breite des Baufeldes 102 erstreckende Zeile des Baufelds 102 gerichtet werden kann. Die Ausdehnung der Zeile senkrecht zur Bearbeitungsrichtung 202 ist so ausgeführt, dass die Scanfelder der Scanneroptiken sich zumindest teilweise überlappen.

Durch die Zuweisung der Flächenstücke zu den entsprechenden Lasern gemäß dem Schachbrettmuster wird eine gleichmäßige Auslastung der Laser erreicht. Hierzu werden die Anzahl der in der Bauteilschicht in einer Linie senkrecht zur Bearbeitungsrichtung 202 liegenden Flächenstücke durch die Anzahl der in diesem Bereich liegenden Scanfelder der Scanneroptiken, d.h. durch die Anzahl der zum Einsatz möglichen Laserstrahlen geteilt und den Laserstrahlen zugewiesen.

Figur 3 zeigt eine schematische Skizze von Bauteilgeometrien 300. Es werden die Gasströmungsrichtung der Gasströmung 110 sowie die Richtung 302 der Belichtung gegen den Gasstrom gezeigt.

Die angenommene Maschinenkonfiguration kann beispielsweise fünfzehn oder mehr Scanneroptiken umfassen, wobei jede Scanneroptik auf eine sich in Bearbeitungsrichtung 302 über die gesamte Breite des Baufeldes 102 erstreckende Zeile des Baufelds 102 gerichtet werden kann. Die Ausdehnung der Zeile senkrecht zur Bearbeitungsrichtung 202 ist so ausgeführt, dass die Scanfelder der Scanneroptiken sich zumindest teilweise überlappen. Alternativ können aber auch so viele Strahlen vorgesehen sein, dass die Laserspots nur mit parallelem Vorschub in der Bearbeitungsrichtung 302 über das Baufeld geführt werden müssen, hierzu können auch mehrere Strahlen mittels einer gemeinsamen Optik gelenkt werden. Die Laserspots müssen zudem nicht zwingend eine runde Geometrie aufweisen, sondern können zum Beispiel auch eine ovale, rechteckige oder polygonale Geometrie aufweisen. Die eine oder mehreren Optiken müssen nicht zwingend Scanneroptiken sein, es kann sich auch um eine oder mehrere bewegliche Bearbeitungsoptiken handeln.

Die Laserspots sind in diesem Beispiel immer in etwa in einer Reihe senkrecht zur Gasströmungsrichtung angeordnet.

Die Punkte in der Skizze in Figur 3 stellen somit die Laserspots bzw. Schmelzbänder zu unterschiedlichen Zeitpunkten in Bearbeitungsrichtung 302 dar.

Die Strategie funktioniert auch entsprechend, wenn eine Vielzahl an Bauteilen auf der Plattform angeordnet ist.

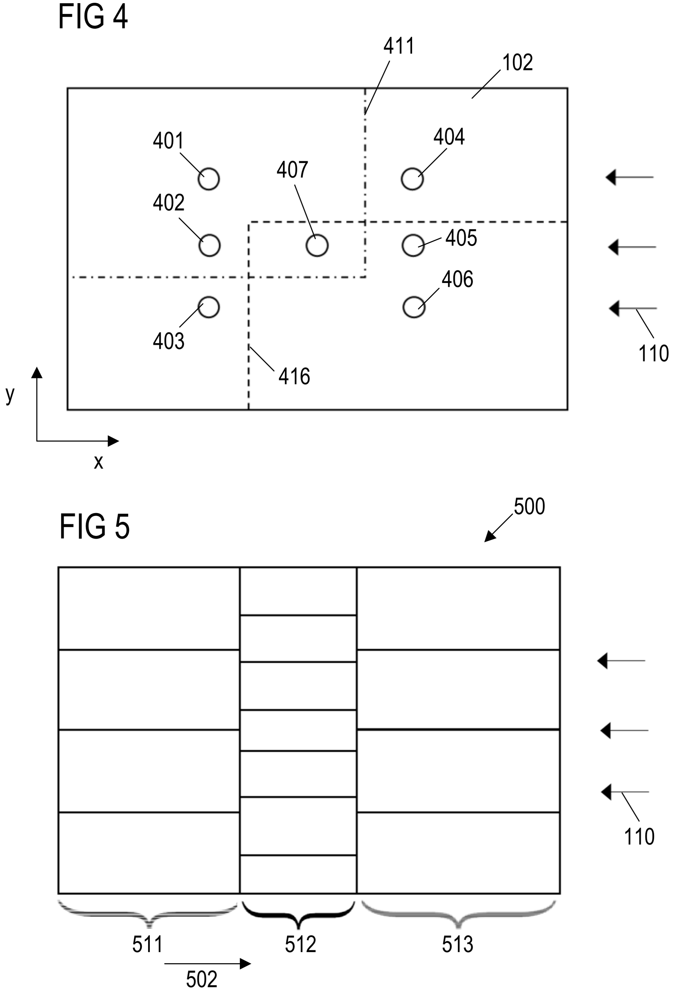

Figur 4 zeigt eine schematische Skizze der Beziehungen einer beispielhaften Optickonfiguration mit sieben Scanneroptiken zum Baufeld 102. Die Punkte 401-407 zeigen die Positionen der Laserstrahlen bei einem senkrechten Strahleinfall auf das Baufeld 102 von der jeweiligen Scanneroptik, d.h. die sogenannten Optikmittelpunkte. Das Feld 411 stellt das Scanfeld der zum Punkt 401 gehörenden Optik dar, das Feld 416 stellt das Scanfeld der zum Punkt 406 gehörenden Optik dar. Die Scanfelder der zu den Punkten 402-405 gehörenden Optiken sind aus Gründen der Übersichtlichkeit nicht dargestellt, sind jedoch in Größe analog der Felder 411 und 416. Das Scanfeld der zu Punkt 407 gehörenden Optik deckt das gesamte Baufeld 102 ab.

Figur 5 zeigt eine schematische Skizze einer beispielhaften Aufteilung 500 des Baufeldes, d.h. einer Trägerplatte bzw. der Schicht des zu verfestigenden Materials, das auf der Trägeroberfläche aufgebracht ist, für eine Maschine mit einer Optikkonfiguration entsprechend Figur 4.

Die grundlegende Idee ist hierbei, dass die Herstellungsplattform in diesem Beispiel komplett in drei globale Spalten 511-513 aufgeteilt wird, welche sich durch die Überlappbereiche der Scanfelder der Optikkonfiguration ergeben. Jede Spalte wird in diesem Beispiel sodann in mehrere Reihen unterteilt. Jede Reihe wird sodann einer bestimmten Optik zugewiesen. In diesem Beispiel werden die erste Spalte 511 sowie die dritte Spalte 513 in vier Reihen aufgeteilt, und die zweite Spalte 512 wird in sieben Reihen aufgeteilt, basierend auf der Anzahl der Optiken, die die jeweilige Spalte erreichen.

In diesem Beispiel werden die Positionen der Reihen- und Spaltengrenzen festgehalten. Eine Bearbeitung erfolgt spaltenweise in Bearbeitungsrichtung 502 entgegen dem Gasstrom. Die Bearbeitung der folgenden Spalte wird erst begonnen, wenn die aktuelle Spalte vollständig bearbeitet ist.

Ein Vorteil dieser Scanstrategie ist es, dass diese leicht zu implementieren ist. Die Probleme, die auf dem entstehenden Schmauch/Rauchkegel und Spritzen basieren, können durch diese Scanstrategie gelöst werden. Vektorblöcke können entsprechend in einem Scanfile definiert werden.

In dieser Scanstrategie werden in manchen Beispielen manche Optiken nicht genutzt, während andere zum gleichen Zeitpunkt zum verfestigen des Materials der Schicht genutzt werden.

Mit dieser Scanstrategie ist eine Aufteilung der Schicht möglich. Die Bearbeitungsrichtung entgegen der Gasströmungsrichtung kann hierbei berücksichtigt werden.

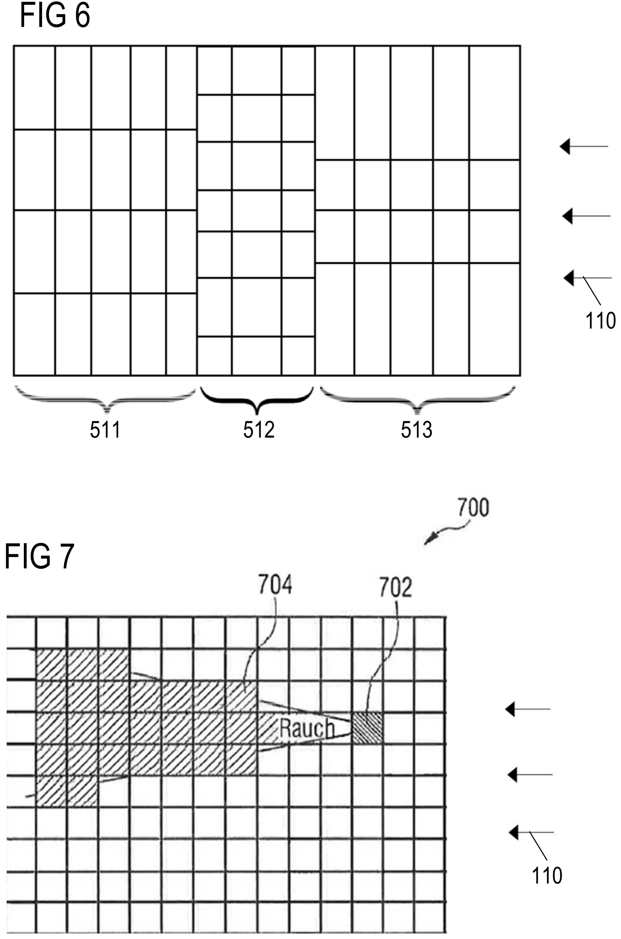

Figur 6 zeigt eine schematische Skizze einer weiteren Scanstrategie 600, welche auf der Aufteilung aus Figur 5 beruht.

In dieser Scanstrategie wird eine optimale Position der Grenze einer Reihe für jede Spalte basierend auf einer Optimierung einer Hatch-Verteilung berechnet. Hierbei kann insbesondere eine annähernde Gleichverteilung der Anzahl und/oder Länge der Hatch-Vektoren angestrebt werden. Die Position der Grenzen der Reihe ist in diesem Beispiel nicht mehr fixiert, einzelne Reihen können breiter als andere Reihen ausgeführt sein. In der Figur ist dies in der dritten Hauptspalte 513 dargestellt, in welcher die beiden innenliegenden Reihen deutlich schmaler als die außenliegenden sind, weil bspw. eine nicht dargestellte Bauteilgeometrie in der dritten Hauptspalte 513 der zu bearbeitenden Bauteilschicht auf einen Bereich in der Mitte der Spalte beschränkt ist. Die Herstellungsgeschwindigkeit des Werkstücks kann somit optimiert werden.

In diesem Beispiel wird jede der drei Hauptspalten 511-513 entsprechend Figur 5 in zusätzliche Unterspalten unterteilt. Es wird erst mit der Bearbeitung einer folgenden Spalte begonnen, wenn alle in der Spalte beinhalteten Reihen fertig bearbeitet sind. Hierdurch kann das Verhalten hinsichtlich des Rauchkegels und der Spritzer verbessert werden. Ein Voreilen eines Laserstrahls in einer Reihe ist nicht so weit möglich, dass eine Beeinträchtigung durch dessen Rauchkegel möglich ist. Durch die Spaltengröße wird ein definierter Maximalabstand zwischen zwei benachbarten Laserspots zwingend eingehalten. Hierzu kann bspw. eine Spaltenbreite gleich dem Maximalabstand gewählt werden.

Um Mikrovektoren zu verhindern, kann das Hineinreichen eines Segments in eine benachbarte Gitterzelle erlaubt sein. Die minimale Zellengröße wird hierbei definiert und hängt von der Breite einer Spalte bzw. des Schachbrettflächenstücks (maximale Länge eines Hatch-Vektors) ab.

Die Bestrahlung der Spalten erfolgt synchronisiert. Alle Reihen in einer Spalte können hierbei z.B. gleichzeitig bestrahlt werden. Die Bestrahlung der nächsten Spalte wird gestartet, wenn die vorherige Spalte durch alle Optiken bzw. Scanner bestrahlt worden ist. Die Probleme, die durch einen vorlaufenden Laserstrahl erzeugten Rauchkegel bzw. Spritzer hervorgerufen werden können, werden hierdurch gelöst bzw. umgangen, wobei die Herstellungszeit des Werkstücks unter Umständen durch zusätzliche Wartezeiten verlängert wird.

Figur 6 zeigt außerdem, dass die Reihengrenzen in der dritten Hauptspalte 513 mehr zur Mitte verschoben sind, weil z.B. das zu erzeugende Bauteil in der dritten Hauptspalte mehr zu generierende Fläche als im Randbereich aufweist. Grundsätzlich kann auch eine Änderung der Reihenverteilung nicht nur beim Übergang der Hauptspalten, sondern auch von Unterspalte zu Unterspalte erlaubt sein. Die Unterspalten können insbesondere auch selbst als Sektionen angesehen werden.

Figur 7 zeigt eine schematische Skizze einer weiteren Scanstrategie 700.

Um die Herstellungsrate bzw. Herstellungsgeschwindigkeit zu verbessern, werden in dieser beispielhaften Scanstrategie alle Zellen in einer Reihe nacheinander und unabhängig von Zellen derselben Spalte bestrahlt. Um jedoch die Probleme, die durch den Rauchkegel bzw. die Spritzer hervorgerufen werden können, besser lösen zu können, wird für jede Zelle überprüft, ob die Bestrahlung dieser Zelle nicht durch andere Zellen blockiert wird. Dies führt zu einer erhöhten Herstellungsrate, wobei die vorgenannten Probleme gelöst bzw. berücksichtigt werden.

In diesem Beispiel wird das Bestrahlen der Zelle 702 durch die Zellen 704 potenziell geblockt, da eine Bestrahlung der Zelle 702 einen Rauchkegel zur Folge hätte, welcher bei einer simultanen Bestrahlung der Zellen 704 die Bauteilqualität negativ beeinflussen würde. Die Definition, welche Zellen bei gleichzeitiger Bestrahlung von dem Rauchkegel negativ beeinflusst würden, ist abhängig von Parametern wie dem Bauteilmaterial, der eingebrachten Laserleistung (d.h. Spotgröße, Laserleistung pro Fläche, Ablenkgeschwindigkeit) sowie der gewünschten Bauteilqualität. Die Zelle 702 kann somit nicht bestrahlt werden, bevor die in den Zellen 704 befindlichen aufzubauenden Bauteilgeometrien bestrahlt wurden.

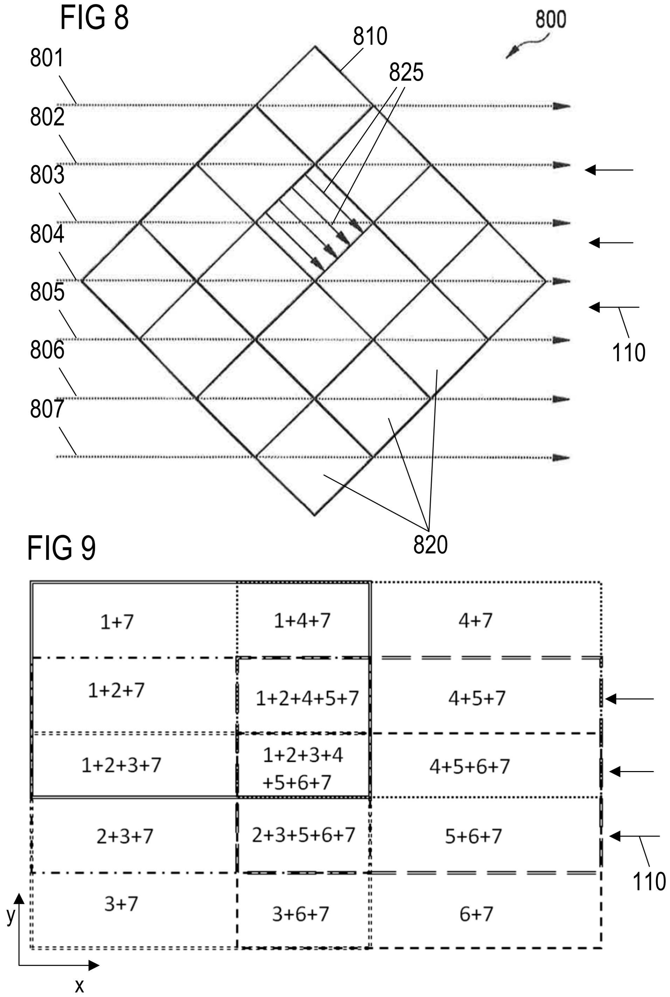

Figur 8 zeigt eine schematische Skizze einer weiteren Scanstrategie 800.

In dieser beispielhaften Scanstrategie wird das Raster weiter definiert.

In den oben beschriebenen beispielhaften Scanstrategien war das Raster an die Achsen ausgerichtet. Je nach Rastergröße kann dies zu vielen getrennten Vektorblöcken führen.

In der Scanstrategie 800 wird das Raster nicht an die Achsen ausgerichtet, sondern ein Zellenraster 810 wird verwendet, das an ein Hatch-Muster ausgerichtet ist, dessen Felder 820 im Beispiel um 45° gedreht zu den Achsen liegen und die Hatch-Vektoren 825 beinhalten. Hierdurch entstehen weniger Zerlegungen für dieselbe Rastergröße und weniger Zellen werden insgesamt definiert, was die Bauleistung zur Herstellung des Werkstücks erhöht.

Das Raster bildet in manchen Ausführungsformen einen rechten Winkel mit der Richtung der Hatch-Segmente, bzw. unterteilt das Baufeld in rechtwinklige Felder 820.

Durch diese Scanstrategie kann der Raum für die Vektorblöcke besser genutzt werden, da weniger Zerlegungen definiert werden.

In manchen Ausführungsformen erfolgt die Scanfeldaufteilung derart, dass ein an der Hatch-Rotation ausgerichtetes Multigitter zur Gleichverteilung von Hatch-Vektoren über alle verfügbaren Optiken mit einem synchronisierten Scan-Fortschritt entgegen der Gasstromrichtung 110 und unter Berücksichtigung von Wechselwirkungen mit dem Schmauch benutzt wird. In Figur 8 zeigen die Pfeile 801 bis 807 sieben Optikreihen, d.h. die Bearbeitungsrichtungen von sieben nebeneinander arbeitenden Bearbeitungsstrahlen.

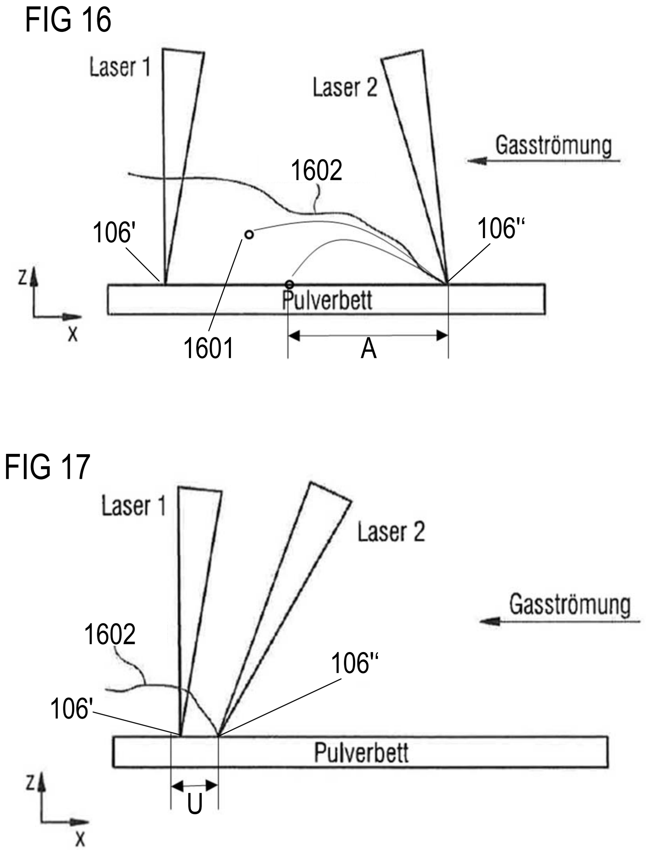

Das Raster in Figur 8 ist so gewählt, dass die Felder 820 sich - bei einer Spaltendefinition, die jeweils ein Feld in jeder der Optik-Reihen 801-807 pro Spalte beinhaltet - aus Sicht der Gasströmungsrichtung 110 hinterschneiden. Wenn alle Bearbeitungsstrahlen gleichzeitig auf das Baufeld gerichtet werden, kann es also dazu kommen, dass zwei Strahlen in Gasströmungsrichtung gleichzeitig hintereinander arbeiten. Dies kann bei einem hinreichend niedrigen Abstand zueinander hingenommen werden, ohne dass eine gravierende Verschlechterung der Bauteilqualität erfolgt, siehe hierzu Ausführungen zu Figur 17. Der maximale Abstand, bis zu dem die gegenseitige Beeinflussung ein bestimmtes Maß nicht überschreitet, wird hierin als Unbehelligungsabstand bezeichnet. Der Unbehelligungsabstand kann abhängig sein vom Bauteilmaterial und/oder der eingebrachten Laserleistung (d.h. Spotgröße, Laserleistung pro Fläche, Ablenkgeschwindigkeit) der beiden Laserstrahlen und/oder der gewünschten Bauteilqualität. Bei der Verwendung von mehreren Strahlen mit unterschiedlichen Strahlparametern kann der Unbehelligungsabstand für jede Strahlkombination zueinander unterschiedlich sein. Da also zwei Strahlen in diesem definierten Unbehelligungsabstand auch in Gasströmungsrichtung hintereinander arbeiten dürfen, werden zwei Auftreffpunkte der Strahlen, die sich innerhalb eines Unbehelligungsabstandes zueinander befinden, für die Überprüfung der Kurvenbeziehung, dass eine durch die Auftreffpunkte gelegte Kurve zu keinem Zeitpunkt eine Tangente aufweist, welche parallel der Gasströmungsrichtung verläuft, als ein Punkt mit der Position ihres Mittelpunkts behandelt.

Figur 9 zeigt eine schematische Skizze einer Unterteilung einer Schicht, bzw. des Baufeldes.

Es wird hierbei ein Raster 900 definiert, wobei maximal erreichbare Bereiche der jeweiligen Optiken gemäß der Optikkonfiguration aus Figur 4über den Punkt eines senkrechten Strahleneinfalls eines Strahls und seine Ausdehnung in x- und y-Richtung berücksichtigt werden.

In diesem Beispiel werden Felder inklusive deren Zuweisung der dieses Feld erreichenden Optiken dargestellt.

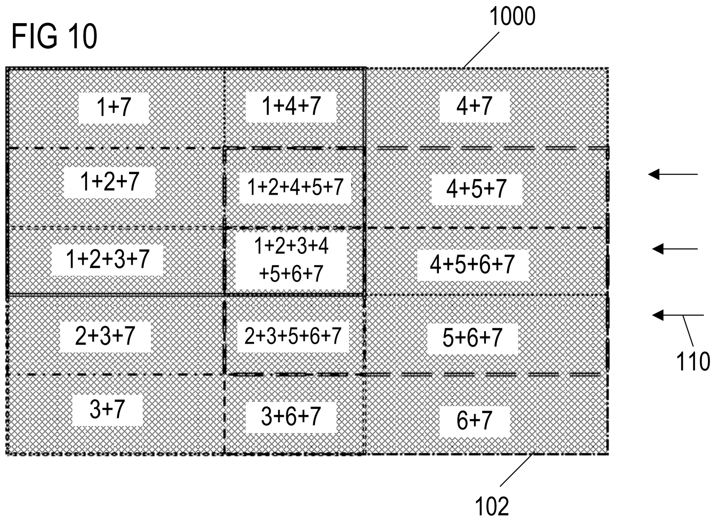

Figur 10 zeigt eine schematische Skizze einer auf dem Raster aus Figur 9 aufbauenden weiteren Unterteilung einer Schicht, bzw. des Baufeldes 102.

Das Raster 1000 basiert auf einer Überlagerung des Rasters der Figur 9 mit einem weiteren Raster, das entsprechend der Vektorausrichtung unter einer dynamischen Berücksichtigung der Hatch-Rotation pro Schicht definiert wird. Das Raster ergibt sich aus der Hatch-Distanz und der Hatch-Rotation.

Vektorblöcke bleiben hierbei erhalten. Hatch-Vektoren werden nicht aufgespalten und eine Mikrovektorisierung findet nicht statt.

Hierbei können zusammengefügte Hatch-Vektoren unter einer Berücksichtigung durch eine Zusammenführung von Feldern ungeteilt dargestellt werden.

Eine Korrektur der Vektorrichtung bei zusammengefügten Hatch-Vektorblöcken kann in manchen Ausführungsformen durchgeführt werden. Vektoren, deren jeweilige Enden aufeinander zeigen und die gleichen x-y-Koordinaten haben, werden nicht zur gleichen Zeit von verschiedenen Strahlen abgetastet. Eine Überhitzung und unerwünschte Materialverdampfung können an dieser Position bzw. in diesem Ortsbereich vermieden werden, sodass verhindert werden kann, dass Poren aufgrund eines Tiefschweißeffekts entstehen.

Die im Raster 1000 generierten Felder sind mit den Bereichen aus Figur 9 überlagert, die jeweils von bestimmten Optiken erreicht werden können.

In manchen Ausführungsformen kann ein Feld, wenn das Feld komplett im Abdeckungsbereich einer Optik liegt, dieser Optik potenziell zugewiesen werden.

Die Zuweisung der Felder zur Optik geschieht dann in Abhängigkeit der Verteilung der Bauteilgeometrie, d.h. der tatsächlichen Hatch-Anordnung im Baufeld 102, sowie ggf. weiterer Parameter, welche die Bauteilqualität und/oder die Bearbeitungszeit beeinflussen. Es kann auch eine weitere Einteilung in Spalten und/oder Reihen gemäß einer der oben beschriebenen Strategien erfolgen.

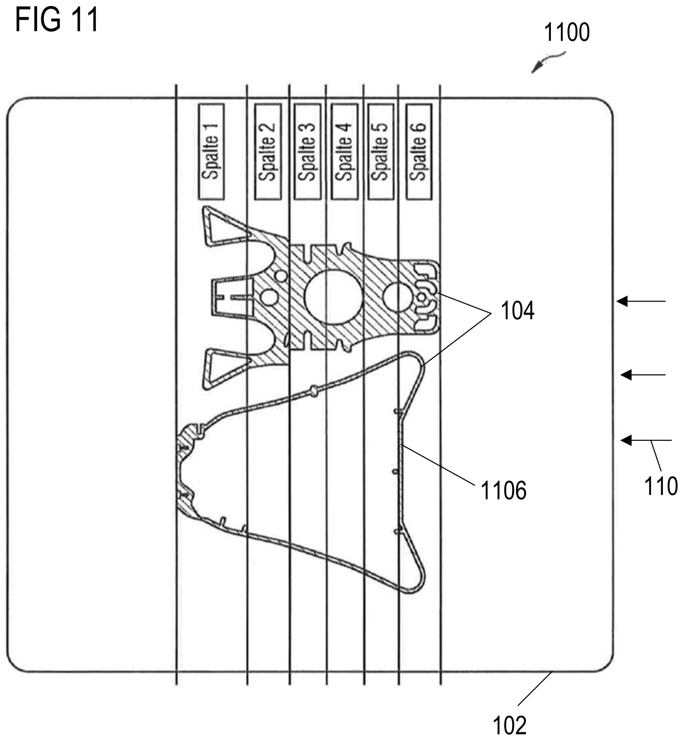

Figur 11 zeigt eine schematische Skizze einer weiteren Unterteilung einer Schicht, bzw. des Baufeldes 102.

Das Raster 1100 definiert in diesem Beispiel Spalten senkrecht zur Gasstromrichtung mit variabler Breite, sodass möglichst eine gleichmäßige Anzahl und Länge an Hatch-Vektoren in jeder Spalte vorliegen, die gleichmäßig über alle Optiken verteilt werden kann. Dies kann über Flächen approximiert werden, um die Berechnungszeit hierfür zu sparen.

Dies führt zu einer Nutzung der globalen Scanflächenverteilung zur Einteilung des Scanfortschritts.

Das Raster 1100 basiert somit auf Spalten mit gleichmäßiger Scanfläche je Optik.

In diesem Beispiel wird eine Mindestanzahl an Spalten definiert, welche sich aus einer Mindestbreite der Spalten ergibt. In diesem Beispiel ergibt sich die Mindestbreite einer Spalte aus der Hatch-Länge und der Hatch-Rotation.

In diesem Beispiel werden die Spalten entgegen der Gasstromrichtung 110 abgearbeitet.

In diesem Beispiel müssen die Spaltengrenzen nicht notwendigerweise Geraden senkrecht zur Gasstromrichtung sein, sondern können auch Freiformen sein.

Zur Erzeugung des Rasters 1100 in Figur 11 kann beispielsweise von Raster 1000 aus Figur 10 ausgegangen werden, hierzu wird das Raster 1000 auf die zu erzeugenden Bauteilstrukturen 104 in der Bauebene angewandt. Dann erfolgt die Spalteneinteilung entsprechend einer Gleichverteilung der Vektorlängen, Belichtungszeiten und/oder Belichtungsfläche auf die Scanneroptiken. Ausgehend von der jeweiligen Spaltengrenze und des Schnittpunktes des Rasters 1100 der Figur 11 mit dem Raster 1000 der Figur 10 ergeben sich Feldgrenzen entsprechend der Hatch-Rotation.

Zu jedem Feld liegen in diesem Beispiel folgende Informationen vor: (i) Nutzbare Optiken zum Scannen des entsprechenden Feldes; (ii) Anzahl an Hatch-Vektoren im Feld; (iii) Länge an Hatch-Vektoren im Feld.

In den hierin beschriebenen Beispielen erfolgt die Zuweisung einzelner Felder zu einer Optik unter dem Grundgedanken, dass jede Optik in einer Spalte (siehe Raster 1100) eine möglichst gleiche Menge (d.h. Anzahl) und / oder Länge an Hatch-Vektoren zugewiesen bekommt, um einen gleichmäßigen Scanfortschritt zu gewährleisten.

Wenn aufgrund der Bauteilgeometrie eine ungleichmäßige Verteilung (Prüfung z.B. anhand von Raster 1000) nicht vermieden werden kann, d.h. wenn eine oder mehrere Optiken in einer Spalte zwingend eine kürze Belichtungszeit zugewiesen bekommen als eine oder mehrere andere Optiken, kann darüber hinaus geprüft werden, ob Bereiche aus einer Spalte weiter rechts vorgezogen werden können, um Bauzeit zu sparen, jedoch unter der Prämisse, dass der Schmauch, der dadurch entsteht, nicht mit dem Scannen von Feldern in den Spalten weiter links interferiert. Ein Beispiel hierfür ist die Bauteilstruktur 1106 in Spalte 6 des Rasters in Figur 11, welche teilweise in Gasströmungsrichtung 110 lediglich eine Hinterschneidung mit der Bauteilstruktur in Spalte 1 bildet. Wenn die im unteren Teil des Baufeldes 102 arbeitenden Bearbeitungsstrahlen nicht auf den oberen Teil ausgelenkt werden können, wären diese während der Bearbeitung der Spalten 2-5 nur kurz auf das Baufeld 102 gerichtet und würden während der Bearbeitung der oberen Bauteilstruktur ausgeschaltet.

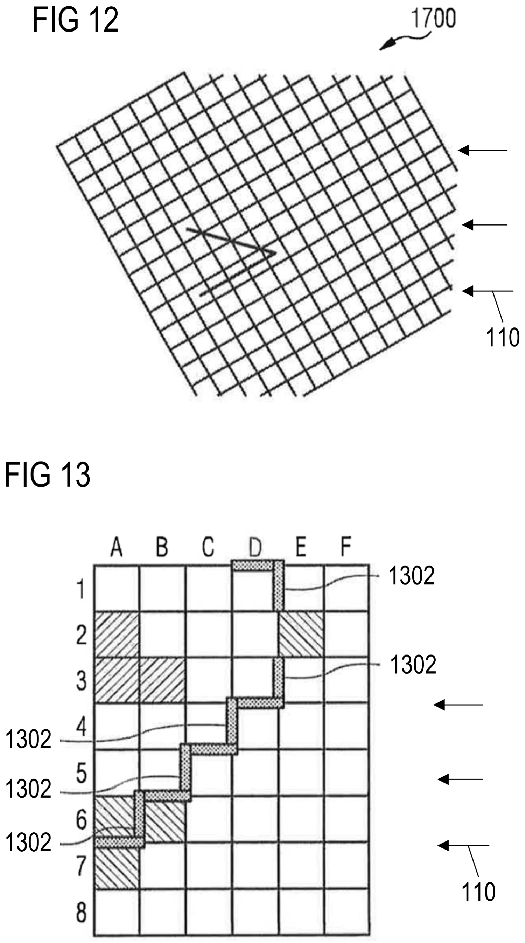

Figur 12 zeigt eine schematische Skizze eines solchen Schmauchkegels. Sperrbereiche eines Feldes sind alle Felder links des Feldes, die von dem Schmauchkegel überlagert werden.

Figur 13 zeigt eine schematische Skizze einer weiteren Scanstrategie.

In diesem Beispiel wurden folgende Felder bereits bearbeitet: Feld A2 durch Optik 1; Felder A3 und B3 durch Optik 2. Aktuell in Bearbeitung ist in diesem Beispiel das Feld A6 durch die Optik 4. Noch zu bearbeiten sind in diesem Beispiel das Feld B6 durch die Optik 4, das Feld A7 durch die Optik 5 und das Feld E2 durch die Optik 2.

Da in diesem Beispiel Optik 2 fertig ist, wird geprüft, ob die nächsten dieser Optik zugeordneten Felder belichtet werden können. Das nächste Feld für Optik 2 ist Feld E2. Dieses ist zur Belichtung "freigegeben", wenn die durch die Bereiche 1302 markierten Felder (d.h. die links der Bereiche 1302 liegenden Felder) mit der Belichtung abgeschlossen sind. Die Definition der Bereiche 1302 ist dabei abhängig vom Rauch- /Spritzer-Winkel und kann von den definierten Feldern oder einer Funktion (x, y im Baufeld) abhängig sein.

Optik 2 kann also in diesem Beispiel mit dem Belichten von Feld E2 beginnen, sobald die Belichtung von Feld A6 abgeschlossen ist. Auf die Belichtung von Feld B6 muss nicht gewartet werden.

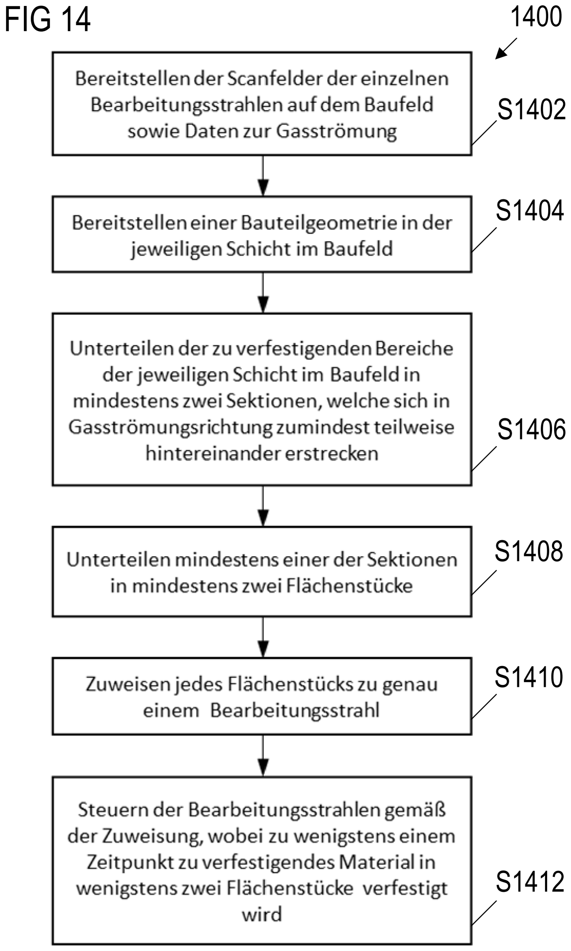

Figur 14 zeigt ein Flussdiagramm eines beispielhaften Steuerverfahrens 1400.

In diesem Beispiel umfasst das Steuerverfahren 1400 einen Schritt S1402 zur Bereitstellung der Scanfelder der einzelnen Bearbeitungsstrahlen auf dem Baufeld, d.h. die möglichen Bearbeitungsbereiche der Strahlen zur Verfestigung des zu verfestigenden Materials in der jeweiligen Schicht im Baufeld, sowie Daten zur Gasströmungsrichtung. In Schritt S1402 werden also die Parameter der aktuellen Maschinenkonfiguration bereitgestellt.

Im Schritt S1404 wird die Bauteilgeometrie in der jeweiligen Schicht im Baufeld bereitgestellt, d.h. die selektiv zu verfestigenden Bereiche.

Im Schritt S1406 werden die zu verfestigenden Bereiche der jeweiligen Schicht dann in mindestens zwei Sektionen unterteilt, welche sich in Gasströmungsrichtung zumindest teilweise hintereinander erstrecken. Die Anzahl und/oder Lage und/oder Form der Sektionen kann dabei durch die Optikkonfiguration der Maschine, bspw. durch die Anzahl und Bearbeitungsbereiche der Strahlen zur Verfestigung des Materials bestimmt sein. Alternativ oder zusätzlich kann die Anzahl und/oder Lage und/oder Form der Sektionen auch durch Beobachtungsbereiche einer oder mehrerer Sensoren und/oder durch Lage und/oder Form und/oder gewünschte Qualität der Bauteilgeometrie in der zu verfestigenden Schicht und/oder der daraus resultierenden Vektoren, anhand welcher die Strahlen zur Verfestigung des Materials über die Materialschicht gelenkt werden, beeinflusst sein. Hierzu kann beispielsweise auch die Winkelauslenkung der Scannerspiegel und/oder die eingebrachte Laserleistung und/oder eine hinnehmbare Beeinflussung durch Schmauchkegel und/oder die Lage von Merging-Regionen von Hatch-Vektoren und/oder eine Bauzeitoptimierung berücksichtigt werden. Die Sektionen können so gewählt werden, dass die Sektionen ohne eine weitere Unterteilung zueinander eine Beziehung einer möglichen negativen Beeinflussung haben, wenn zumindest zwei Sektionen gleichzeitig bearbeitet würden, d.h. dass bei einer gleichzeitigen Bearbeitung zumindest eines Teils einer Sektion die Bearbeitung zumindest eines Teils einer anderen Sektion negativ beeinflusst würde.

Im Schritt S1408 wird mindestens eine Sektion in wenigstens zwei Flächenstücke unterteilt. Es gelten als Einteilungskriterien im Wesentlichen dieselben wie für die Unterteilung in die Sektionen, insbesondere kann die Anzahl der in der Sektion zur Belichtung möglichen Laserstrahlen und/oder eine Vektorverteilung zur Steuerung der Strahlen auf das zu verfestigende Material bestimmend für die Anzahl der Flächenstücke sein. Bevorzugt sind die Flächenstücke so gewählt, dass die gleichzeitige Bearbeitung von wenigstens zwei Flächenstücken in der einen Sektion ermöglicht wird. Insbesondere kann zur Aufteilung der Flächenstücke eine der oben beschriebenen Methoden und Strategien angewendet werden. Die anderen Sektionen können ebenfalls in Flächenstücke aufgeteilt werden oder lediglich ein Flächenstück enthalten. Nach der Aufteilung der mindestens einen Sektion in wenigstens zwei Flächenstücke ist das zu verfestigende Material in der jeweiligen Schicht also in mindestens drei Flächenstücke unterteilt.

Im Schritt S1410 wird jedes Flächenstück genau einem Bearbeitungsstrahl zugewiesen. Wie oben beschrieben können Konturzüge eines zu erzeugenden Bauteils dabei über mehrere Flächenstücke verlaufen und gelten dann losgelöst von der Zuweisung, gelten also im Sinne der Erfindung dann nicht als Teil des Flächenstücks und können somit auch durch einen anderen Strahl als dem dem Flächenstück zugewiesenen Strahl bearbeitet werden. Bevorzugt wird jedem Flächenstück nicht nur ein Bearbeitungsstrahl zugewiesen, sondern weiter auch eine Bearbeitungsreihenfolge aller jeweils einem Strahl zugeordneten Flächenstücke global oder sektionsweise bestimmt.

Bevorzugt wird aus den oben beschriebenen Strategien eine Methode ausgewählt, welche eine möglichst schnelle Bearbeitung unter angeforderten Rahmenbedingungen (z.B. Bauteilqualität) bereitstellt.

Im Schritt S1412 werden die Bearbeitungsstrahlen gemäß der Zuweisung und ggf. zugewiesenen Reihenfolge gesteuert, wobei zu wenigstens einem Zeitpunkt zu verfestigendes Material in wenigstens zwei Flächenstücken verfestigt wird, d.h. wobei wenigstens zwei Bearbeitungsstrahlen zwei Flächenstücke gleichzeitig bestrahlen.

Einzelne Schritte der Schritte S1402-S1412 können Unterschritte enthalten, außerdem können vor, zwischen und/oder nach den Schritten S1402-S1412 weitere Schritte ausgeführt werden. Das Steuerverfahren 1400 muss zudem nicht für jede Schicht des zu verfestigenden Materials, bzw. des Bauteils angewendet werden. Es ist darüber hinaus möglich einzelne oder mehrere Schritte außerhalb einer Multistrahlenvorrichtung, bspw. an einem Computer-Arbeitsplatz durchzuführen. Lediglich Schritt S1412 muss durch eine Steuereinrichtung der Multistrahlenvorrichtung durchgeführt werden.

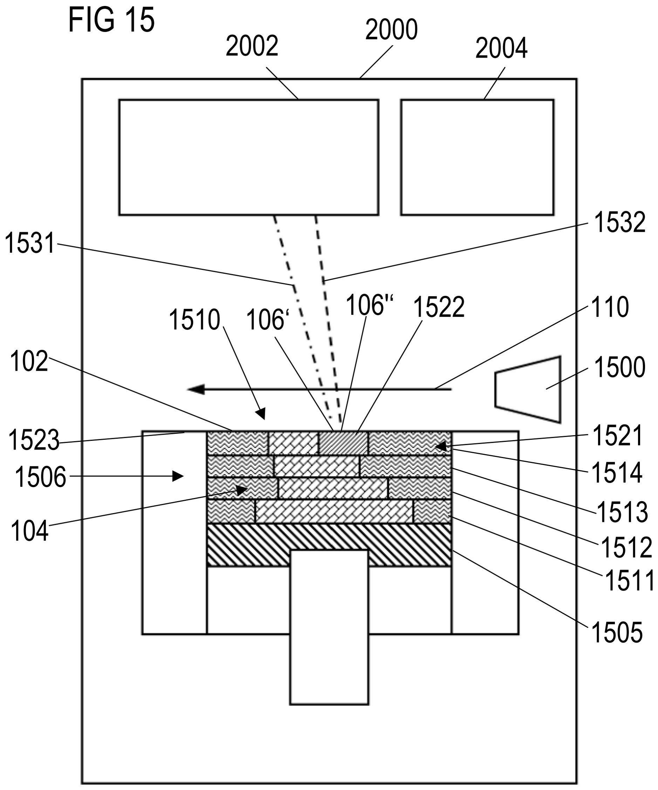

Figur 15 zeigt ein schematisches Diagramm einer Herstellungsvorrichtung 2000. Die Herstellungsvorrichtung 2000 umfasst eine Multistrahlenvorrichtung 2002 mit einer oder mehreren Strahlenquellen zur Erzeugung mehrerer Strahlen. Die Multistrahlenvorrichtung kann außerdem eine oder mehrere Optiken, z.B. Scanneroptiken aufweisen. Die Herstellvorrichtung umfasst weiter eine mit der Multistrahlenvorrichtung verbundene Steuereinrichtung 2004 zum Ausführen der Steuerverfahren gemäß den hierin beschriebenen Ausführungsformen. In einer nicht dargestellten Prozesskammer weist die Herstellvorrichtung außerdem ein Materialbett (hier Pulverbett) 1506 zur Aufnahme von verfestigbarem Material 1510 auf, durch dessen selektive Verfestigung ein Bauteil 104 hergestellt wird. Die Oberfläche des Materialbetts 1506 bildet das Baufeld 102. Im Materialbett 1506 ist ein vertikal verstellbarer Träger 1505 zur Aufnahme des Materials 1510 angeordnet. Die Figur zeigt einen Zeitpunkt, in welchem bereits vier Materialschichten 1511 - 1514 auf dem Träger angeordnet sind, wobei die oberste Materialschicht 1514 sich gerade in Bearbeitung befindet. Hierzu werden eine erste Auftreffstelle 106' eines ersten Laserstrahls 1531 sowie eine zweite Auftreffstelle 106" eines zweiten Laserstrahls 1532 über das Baufeld 102 gesteuert. Die oberste Materialschicht 1514 zeigt unterschiedliche Bereiche auf, wobei ein erster zickzack schraffierter Bereich 1521 verfestigbares Material darstellt, welches nicht zur Verfestigung vorgesehen ist. Ein zweiter schräg schraffierter Bereich 1522 stellt das zur Erzeugung des Bauteils 104 zu verfestigende Material dar. Ein dritter backsteinförmig schraffierter Bereich 1523 stellt das bereits verfestigte Material dar. Die Herstellvorrichtung 2000 kann außerdem nicht dargestellte Sensoren, bspw. Strahlungssensoren wie z.B. Kameras enthalten, welche dem Baufeld 102 und/oder der Multistrahlenvorrichtung 2002 zugeordnet oder darin enthalten sein können und mit der Steuereinrichtung 2004 verbunden sein können. Darüber hinaus weist die Herstellvorrichtung 2000 eine Gaszufuhreinrichtung 1500, z.B. in Form einer Düse oder mehrerer Düsen auf, durch welche Gas in einer (ggf. lokal zu unterschiedlichen Punkten des Baufelds unterschiedlicher) Gasströmungsrichtung 110 zum Abtransport von während der Bearbeitung entstehendem Schmauchs und/oder Spritzer über die Bearbeitungsstellen 106', 106" geführt wird.

Figuren 16 und 17 zeigen schematische Skizzen einer Interaktion eines Lasers mit durch einen zweiten Laser erzeugten Spritzern 1601 und einer Rauchfahne 1602.

In Figur 16 interagiert der Laser 1 mit der Rauchfahne 1602, die durch den Laser 2 verursacht wird. In diesem Beispiel ist der Abstand zwischen den beiden Lasern in x-Richtung relativ groß (im Vergleich zum Beispiel, das in Figur 17 gezeigt wird). Die Rauchfahne ist in z-Richtung relativ stark ausgeprägt. Laserstrahl 1 wird durch die Rauchfahne defokussiert. Dies hat einen verminderten Energieeintrag ins Pulverbett zur Folge.

In Figur 17 interagiert der Laser 1 ebenfalls mit der Rauchfahne, die durch den Laser 2 verursacht wird. In diesem Beispiel ist der Abstand zwischen den beiden Lasern in x-Richtung relativ klein. Die Rauchfahne ist in z-Richtung relativ gering ausgeprägt. Der Laserstrahl 1 wird durch die Rauchfahne nur schwach defokussiert. Ein verminderter Energieeintrag ins Pulverbett kann durch einen definierten, maximalen Abstand in x-Richtung begrenzt werden.

In Figur 16 und 17 ebenfalls dargestellt ist ein Abführungsabstand A, sowie ein Unbehelligungsabstand U.

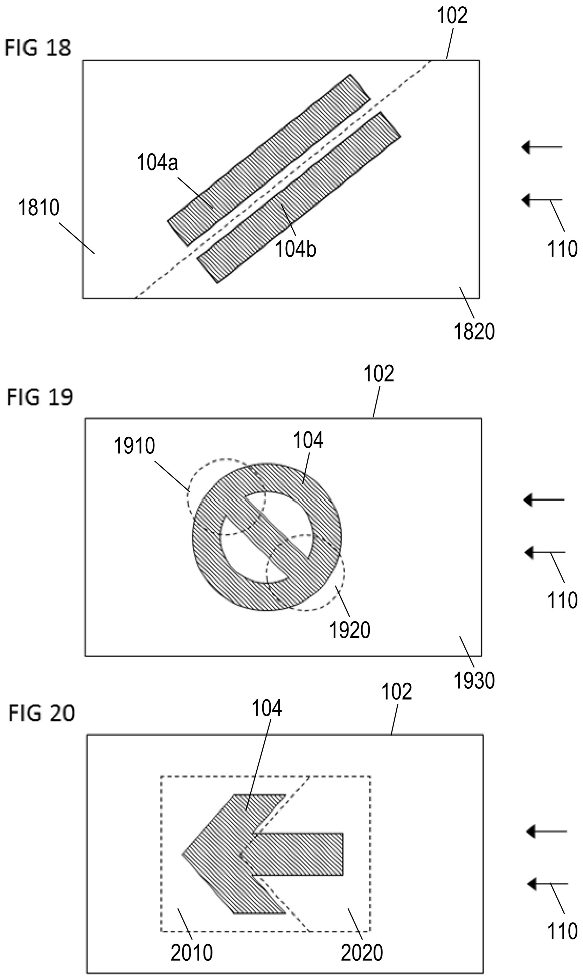

Figur 18 zeigt eine Unterteilung eines Baufeldes 102 in eine erste Sektionen 1810 und eine zweite Sektion 1820. Die Sektion 1810 erstreckt sich in Gasströmungsrichtung hinter der Sektion 1820. Die Trennlinie der beiden Sektionen verläuft schräg über das Baufeld und orientiert sich somit an den Bauteilstrukturen 104a, 104b in der dargestellten Materialschicht. Entsprechend der Erfindung wird die Bearbeitung von Struktur 104a zumindest teilweise vor Struktur 104b erfolgen.

Figur 19 zeigt eine weitere Unterteilung eines Baufeldes 102 in eine erste kreisförmige Sektion 1910, eine zweite kreisförmige Sektion 1920 und eine dritte Sektion 1930, welche die beiden Sektionen 1910 und 1920 umschließt. Die Sektionen können Beispielsweise so gewählt sein, weil die Bauteilstruktur 104 in den Bereichen der Sektionen 1910 und 1920 höhere Qualitätsanforderung aufweist, oder weil die Bauteilgeometrie dort für eine Bearbeitung unvorteilhafter sein kann. Entsprechend der Erfindung wird die Bearbeitung der Sektionen 1910 und 1920 zumindest teilweise vor der Sektion 1930 erfolgen, ggf. kann die Bearbeitung der Sektionen 1910 und 1920 zumindest teilweise gleichzeitig erfolgen.

Figur 20 zeigt eine weitere Sektionierung. Eine erste Sektion 2010 und eine zweite Sektion 2020 beinhalten hierbei nicht das gesamte Baufeld 102, sondern sind entsprechend einer Bauteilstruktur 104 orientiert. Die Aufteilung kann beispielsweise aufgrund einer Gleichverteilung der Belichtungszeit erfolgt sein. Im Sinne der Erfindung wird Sektion 2010 zumindest teilweise von Sektion 2020 bearbeitet werden.

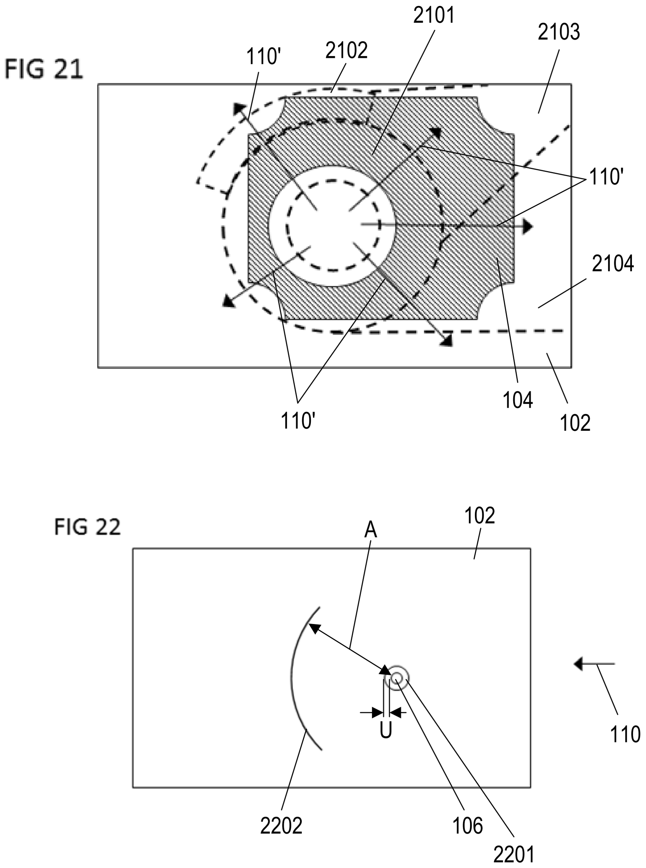

Figur 21 zeigt eine weitere Unterteilung der Materialschicht, bzw. des Baufeldes 102, bzw. des Bauteils 104. In diesem Beispiel wird von einer sich aus einer Mitte des Baufeldes radial nach außen verlaufenden Gasströmungsrichtung 110' ausgegangen. Das Baufeld beinhaltet eine erste Sektion 2101, eine zweite Sektion 2102, eine dritte Sektion 2103 und eine vierte Sektion 2104. In Gasströmungsrichtung 110' erstrecken sich alle anderen Sektionen vollständig hinter Sektion 2101. Zudem erstreckt sich die vierte Sektion 2104 in Gasströmungsrichtung 110' teilweise hinter der dritten Sektion 2103.

Figur 22 zeigt eine Auftreffstelle 106 eines ersten Laserstrahls auf der im Baufeld 102 befindlichen Materialschicht. Um die Bearbeitungsstelle 106 ergibt sich mit dem Unbehelligungsabstand U als Radius (wenn man von die Bearbeitungsstelle 106 als Punkt ohne eigene Ausdehnung annimmt), bzw. Kurvenabstand eine Unbehelligungszone 2201, in welcher eine gleichzeitige Bestrahlung eines zweiten Laserstrahls erfolgen könnte. Ein Kurvenstück 2202 zeigt mit dem Abführungsabstand als Radius, bzw. Kurvenabstand eine Grenze, hinter welcher in Gasströmungsrichtung keine gleichzeitige oder spätere Belichtung des ersten oder zweiten Lasers erfolgen sollte.

Die folgenden Beispiele werden ebenfalls von der vorliegenden Offenlegung erfasst und können ganz oder teilweise in Ausführungsformen der hierin beschriebenen Erfindung aufgenommen werden:
1. Steuerverfahren zur Steuerung einer Multistrahlenvorrichtung mit einer oder mehreren Strahlenquellen zur Erzeugung mehrerer Strahlen für eine Anlage zur Herstellung eines dreidimensionalen Werkstücks mittels eines generativen Schichtbauverfahrens, wobei das Steuerverfahren umfasst:
   Steuern der mehreren Strahlen derart, dass die Strahlen im Wesentlichen entlang einer Linie bei einem Auftreffen auf eine Oberfläche eines Trägers, auf dem ein durch die mehreren Strahlen zu verfestigendes Material zur Herstellung des dreidimensionalen Werkstücks aufgebracht ist, angeordnet sind, wobei die Linie im Wesentlichen senkrecht zu einer Gasströmungsrichtung einer Gasströmung liegt, die zum Entfernen eines Schmauchs verwendet wird, der beim Verfestigen des zu verfestigenden Materials durch die Strahlen entsteht,
   wobei die Strahlen zur Verfestigung einer Schicht des zu verfestigenden Materials zur Herstellung des dreidimensionalen Werkstücks im Wesentlichen entgegen der Gasströmungsrichtung der Gasströmung über die Oberfläche des Trägers gesteuert werden;
   wobei das Steuerverfahren ferner umfasst:
      Unterteilen der Schicht des zu verfestigenden Materials in eine vorbestimmte Anzahl von Sektionen, wobei sich jede der Sektionen im Wesentlichen senkrecht zur Gasströmungsrichtung der Gasströmung erstreckt,
      Unterteilen jeder der Sektionen in eine vorbestimmte Anzahl von Flächenstücken, wobei jedes der Flächenstücke einem oder mehreren bestimmten Strahlen der mehreren Strahlen zugeordnet ist, die das zu verfestigende Material in dem zugeordneten Flächenstück verfestigen, und wobei jede der Sektionen basierend auf einem vordefinierten Mindestabstand und/oder Maximalabstand zwischen benachbarten Strahlen bei dem Auftreffen der Strahlen auf die Oberfläche des Trägers während der Verfestigung der Schicht des zu verfestigenden Materials zur Herstellung des dreidimensionalen Werkstücks in die Flächenstücke unterteilt wird.
2. Steuerverfahren nach Beispiel 1, wobei die vorbestimmte Anzahl von Flächenstücken, in die die entsprechende Sektion unterteilt wird, basierend auf einer Ausdehnung der Sektion senkrecht zur Gasströmungsrichtung der Gasströmung definiert wird, und wobei die Ausdehnung auf einer Ausdehnung des dreidimensionalen Werkstücks in der zu verfestigenden Schicht basiert.
3. Steuerverfahren nach Beispiel 1 oder 2, wobei die Flächenstücke in einer Sektion äquidistante Flächenstücke umfassen.
4. Steuerverfahren nach einem der Beispiele 1 bis 3, wobei die vorbestimmte Anzahl von Flächenstücken jeder der Sektionen einer Anzahl der mehreren Strahlen entspricht.
5. Steuerverfahren nach einem der Beispiele 1 bis 4, wobei das Unterteilen der Schicht auf einer Anzahl von Vektoren, die den jeweiligen Strahlen zugeordnet werden, basiert, wobei die Vektoren einen Abtastvorgang der Schicht durch die Strahlen definieren.
6. Steuerverfahren nach einem der Beispiele 1 bis 5, wobei jedes der Flächenstücke, das einem bestimmten Strahl der mehreren Strahlen zugeordnet ist, in mehrere Bestrahlungsfelder basierend auf einem Strahlendurchmesser des bestimmten Strahls aufgeteilt wird.
7. Steuerverfahren nach Beispiel 6, wobei ein geschlossener Konturzug zur Herstellung einer Kontur des dreidimensionalen Werkstücks weniger als einer bestimmten Anzahl der mehreren Strahlen zugeordnet wird.
8. Steuerverfahren nach einem der Beispiele 1 bis 7, wobei die Schicht des zu verfestigenden Materials mittels eines Rasters oder einer Überlagerung mehrerer Raster in die Flächenstücke aufgeteilt wird.
9. Steuerverfahren nach Beispiel 8, wobei ein erstes Raster die Schicht in Bereiche, die maximal jeweils durch die mehreren Strahlen erreicht werden, aufteilt.
10. Steuerverfahren nach Beispiel 9, wobei die Bereiche über Punkte senkrechter Strahleneinfälle und eine Ausdehnung in x-y-Richtung mit Bezug auf die Oberfläche des Trägers konfiguriert werden.
11. Steuerverfahren nach einem der Beispiele 8 bis 10, wobei ein zweites Raster die Schicht des zu verfestigenden Materials entsprechend einer Vektorausrichtung von Vektoren der Strahlen aufteilt, wobei die Vektoren ein Fortschreiten der Strahlen definieren.
12. Steuerverfahren nach Beispiel 11, wobei die Vektoren Hatch-Vektoren umfassen, und wobei das zweite Raster die Schicht des zu verfestigenden Materials entsprechend der Vektorausrichtung der Hatch-Vektoren in einem Hatch-Muster basierend auf einer Hatch-Distanz und einer Hatch-Rotation des Hatch-Musters aufteilt, wobei die Hatch-Vektoren das Fortschreiten der Strahlen definieren.
13. Steuerverfahren nach Beispiel 11 oder 12, wobei eine Region, in der die Vektoren mergen, nicht in verschiedene Sektionen, die verschiedenen Strahlen zugeordnet werden, geteilt wird.
14. Steuerverfahren nach Beispiel 13, wobei die Vektorausrichtung der Vektoren in der Region derart definiert wird, dass Vektoren in der Region nicht aufeinander zulaufen.
15. Steuerverfahren nach einem der Beispiele 11 bis 14, wenn abhängig von einem der Beispiele 9 oder 10, wobei die Schicht in die Flächenstücke basierend auf der Überlagerung des ersten Rasters mit dem zweiten Raster unterteilt wird.
16. Steuerverfahren nach einem der Beispiele 1 bis 15, wobei die Sektionen Spalten umfassen, die im Wesentlichen senkrecht zu der Gasströmungsrichtung der Gasströmung verlaufen, und wobei eine Ausdehnung der jeweiligen Spalte parallel zu der Gasströmungsrichtung der Gasströmung derart definiert wird, dass jede der Spalten eine gleiche Anzahl und/oder eine gleiche Länge an Vektoren der Strahlen aufweist.
17. Steuerverfahren nach Beispiel 16, wenn abhängig von Beispiel 15, wobei die Überlagerung eine Überlagerung des ersten und zweiten Rasters mit den Spalten umfasst.
18. Steuerverfahren nach einem der Beispiele 1 bis 17, wobei die Schicht basierend auf einer Anzahl von für ein Feld der Schicht nutzbaren Strahlungsquellen zum Scannen des Feldes, einer Anzahl an Vektoren im Feld und einer Länge der Vektoren unterteilt wird.
19. Steuerverfahren nach einem der Beispiele 1 bis 18, wobei jedem der Strahlungsquellen in einer der Sektionen eine gleiche Anzahl und / oder Länge an Vektoren zugewiesen wird.
20. Steuerverfahren nach einem der Beispiele 1 bis 19, ferner umfassend:
   Bestimmen, basierend auf einer Bestrahlung des Materials in der Schicht in einem ersten Flächenstück mit einem der Strahlen, eines Bereiches, mit Bezug auf die Oberfläche des Trägers, des Schmauchs und/oder Spritzern, die durch die Bestrahlung in dem ersten Flächenstück entstehen, und
   Bestimmen, basierend auf dem Bereich des Schmauchs und/oder der Spritzer, ob ein zweites Flächenstück durch den Strahl oder einen anderen Strahl, unter Berücksichtigung einer Position des Strahls oder der anderen Strahlen bei einem Auftreffen auf die Schicht relativ zu dem Bereich des Schmauchs und/oder der Spritzer, bestrahlt werden kann.
21. Steuerverfahren nach einem der Beispiele 1 bis 20, wobei die Strahlen Laserstrahlen umfassen.
22. Computerprogramm, das in eine programmierbare Steuerungseinrichtung ladbar ist, mit einem Programmcode, um ein Steuerverfahren gemäß einem der Beispiele 1 bis 21 auszuführen, wenn das Computerprogramm auf der Steuerungseinrichtung ausgeführt wird.
23. Datenträger, der das Computerprogramm nach Beispiel 22 enthält, wobei der Datenträger ein elektrisches Signal, ein optisches Signal, ein Funksignal oder computerlesbares Speichermedium umfasst.
24. Steuerungseinrichtung zur Steuerung einer Multistrahlenvorrichtung mit einer oder mehreren Strahlenquellen zur Erzeugung mehrerer Strahlen für eine Anlage zur Herstellung eines dreidimensionalen Werkstücks mittels eines generativen Schichtbauverfahrens, wobei die Steuerungseinrichtung umfasst:
   einen oder mehrere Prozessoren; und
   einen Speicher, der Anweisungen enthält, die von dem einen oder den mehreren Prozessoren ausführbar sind, wodurch die Steuerungseinrichtung betreibbar ist, um das Verfahren nach einem der Beispiele 1 bis 21 durchzuführen.
25. Herstellungsvorrichtung zur Herstellung eines dreidimensionalen Werkstücks mittels eines generativen Schichtbauverfahrens, wobei die Herstellungsvorrichtung umfasst:
   eine Multistrahlenvorrichtung mit einer oder mehreren Strahlenquellen zur Erzeugung mehrerer Strahlen; und
   die Steuerungseinrichtung nach Beispiel 24.

Die folgenden Beispiele sind ebenfalls Teil der Offenlegung der vorliegenden Erfindung:
1. Steuerverfahren zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens, bei dem ein verfestigbares Material zur Herstellung des dreidimensionalen Werkstücks schichtweise auf einer Oberfläche eines Trägers aufgebracht wird und das verfestigbare Material in einer jeweiligen Schicht an jeweiligen Auftreffstellen der mehreren Strahlen auf dem verfestigbaren Material durch die mehreren Strahlen verfestigt wird,
   wobei die Auftreffstellen der Strahlen zur Verfestigung selektiver Bereiche einer der Schichten des verfestigbaren Materials zur Herstellung des dreidimensionalen Werkstücks jeweils im Wesentlichen entgegen einer Gasströmungsrichtung einer Gasströmung über die Oberfläche des Trägers gesteuert werden;
   wobei das Steuerverfahren umfasst:
      (a) Unterteilen des zu verfestigenden Materials in der jeweiligen Schicht in mindestens zwei Sektionen, wobei sich zwei der mindestens zwei Sektionen in Gasströmungsrichtung der über den zwei der mindestens zwei Sektionen vorherrschenden Gasströmung zumindest teilweise hintereinander erstrecken,
      (b) Unterteilen mindestens einer der zwei der mindestens zwei Sektionen in mindestens zwei Flächenstücke,
      (c) Zuweisen jedes der Flächenstücke zu genau einem bestimmten Strahl, der das zu verfestigende Material in dem zugewiesenen Flächenstück verfestigt,
      (d) Steuern der Auftreffstellen der Strahlen derart, dass zu wenigstens einem Zeitpunkt einer Belichtung des zu verfestigenden Materials das zu verfestigende Material in wenigstens zwei Flächenstücken verfestigt wird, und ein Netz aus zwischen jedem Mittelpunkt der Auftreffstellen zu jedem anderen Mittelpunkt der Auftreffstellen verlaufender Geraden zu keinem Zeitpunkt der Belichtung, in dem sich alle Mittelpunkte der Auftreffstellen außerhalb eines vorbestimmten Abstandes zueinander befinden, eine Gerade parallel der Gasströmungsrichtung der über den zwei der mindestens zwei Sektionen vorherrschenden Gasströmung aufweist.
2. Steuerverfahren nach Beispiel 1, wobei die Auftreffstellen der Strahlen zumindest teilweise kontinuierlich über die Oberfläche des Trägers gesteuert werden.
3. Steuerverfahren nach Beispiel 1 oder 2, wobei sich mindestens zwei der Mittelpunkte der Auftreffstellen für mindestens eine vorbestimmte Dauer außerhalb des vorbestimmten Abstandes zueinander befinden.
4. Steuerverfahren nach Beispiel 3, wobei sich alle Mittelpunkte der Auftreffstellen für mindestens die vorbestimmte Dauer außerhalb des vorbestimmten Abstandes zueinander befinden.
5. Steuerverfahren nach einem der vorhergehenden Beispiele, wobei vor der Zuweisung der Flächenstücke zu genau einem bestimmten Strahl, jedes der Flächenstücke durch dessen Lage zur Oberfläche des Trägers und/oder zu einem Gasstromauslass der Gasströmung einem oder mehreren bestimmten Strahlen der mehreren Strahlen zugeordnet wird.
6. Steuerverfahren nach einem der vorhergehenden Beispiele, wobei eine Lage und/oder eine Ausdehnung der Sektionen auf der Oberfläche des Trägers und/oder eine Anzahl der Sektionen definiert werden basierend auf:
   einer Ausdehnung und/oder Lage des dreidimensionalen Werkstücks in der Schicht des verfestigbaren Materials, und/oder
   einer Lage von Scanfeldern der Strahlen, die über Punkte senkrechter Strahleneinfälle und eine Ausdehnung mit Bezug auf die Oberfläche des Trägers und/oder einen Winkel zur Achse des jeweiligen senkrechten Strahleinfalls konfiguriert werden.
7. Steuerverfahren nach einem der vorhergehenden Beispiele, wobei alle Sektionen in Richtung senkrecht zur Gasströmungsrichtung der Gasströmung mit derselben Ausdehnung definiert werden.
8. Steuerverfahren nach einem der vorhergehenden Beispiele, wobei alle Sektionen in Gasströmungsrichtung der Gasströmung mit derselben Ausdehnung definiert werden.
9. Steuerverfahren nach einem der vorhergehenden Beispiele, wobei die Belichtung eines jeden Flächenstücks in einer zweiten Sektion, welche sich in Gasströmungsrichtung wenigstens teilweise vor einer anderen ersten Sektion erstreckt, erst begonnen wird, nachdem das zu verfestigende Material aller Flächenstücke der ersten Sektion vollständig bestrahlt wurde.
10. Steuerverfahren nach einem der vorhergehenden Beispiele, wobei eine jede Auftreffstelle so gesteuert wird, dass diese sich nicht in Gasströmungsrichtung außerhalb eines Abführungsabstandes zu einer Stelle befindet, an welcher das zu verfestigende Material der jeweiligen Schicht bereits bestrahlt wurde.
11. Steuerverfahren nach einem der vorhergehenden Beispiele, wobei eine Anzahl von Flächenstücken, in die die entsprechende Sektion unterteilt wird, basierend auf einer Ausdehnung der Sektion senkrecht zur Gasströmungsrichtung der Gasströmung und/oder einer Lage der Sektion in der Schicht des verfestigbaren Materials definiert wird.
12. Steuerverfahren nach einem der vorhergehenden Beispiele, wobei eine Anzahl von Flächenstücken in einer Sektion durch eine Anzahl der maximal zum gleichen Zeitpunkt in der Sektion belichtenden Strahlen oder deren Vielfaches definiert wird.
13. Steuerverfahren nach einem der vorhergehenden Beispiele, wobei die Flächenstücke in einer der Sektionen im Wesentlichen in gleich große Flächenstücke unterteilt werden.
14. Steuerverfahren nach einem der Beispiele 1 bis 12, wobei das Unterteilen des zu verfestigenden Materials der Schicht auf einer Anzahl und/oder Länge von Vektoren, die den jeweiligen Strahlen zugeordnet werden, basiert, wobei die Vektoren einen Abtastvorgang der Schicht durch die Strahlen definieren.
15. Steuerverfahren nach einem der Beispiele 1 bis 12, wobei das Unterteilen des zu verfestigenden Materials der Schicht auf einer den jeweiligen Strahlen zugeordneten, insbesondere im Wesentlichen gleichverteilten, Belichtungszeit, basiert.
16. Steuerverfahren nach einem der vorhergehenden Beispiele, wobei jedes der Flächenstücke, das einem bestimmten Strahl der mehreren Strahlen zugeordnet ist, in mehrere Bestrahlungsfelder basierend auf einem Strahlendurchmesser des bestimmten Strahls aufgeteilt wird.
17. Steuerverfahren nach einem der vorhergehenden Beispiele, wobei ein geschlossener Konturzug zur Herstellung einer Kontur des dreidimensionalen Werkstücks unabhängig von der Lage des Konturzugs in den Flächenstücken einem oder mehreren Strahlen, insbesondere nur einem Strahl, zugeordnet wird.
18. Steuerverfahren nach einem der vorhergehenden Beispiele, wobei das zu verfestigende Material in der jeweiligen Schicht mittels eines Rasters oder einer Überlagerung mehrerer Raster in die Flächenstücke aufgeteilt wird.
19. Steuerverfahren nach Beispiel 18, wobei ein erstes Raster die Schicht in Bereiche, die jeweils durch einzelne oder mehrere Strahlen erreicht werden, aufteilt, wobei die Bereiche über Punkte senkrechter Strahleneinfälle und eine Ausdehnung mit Bezug auf die Oberfläche des Trägers und/oder einen Winkel zur Achse des jeweiligen senkrechten Strahleinfalls konfiguriert werden.
20. Steuerverfahren nach einem der Beispiele 18 oder 19, wobei ein zweites Raster das zu verfestigende Material in der jeweiligen Schicht entsprechend einer Vektorausrichtung von Vektoren der Strahlen aufteilt, wobei die Vektoren ein Fortschreiten der Strahlen definieren.
21. Steuerverfahren nach Beispiel 20, wobei die Vektorausrichtung der Vektoren in angrenzenden Flächenstücken derart definiert wird, dass Vektoren an den Flächengrenzen nicht aufeinander zulaufen.
22. Steuerverfahren nach einem der vorhergehenden Beispiele, wobei die Sektionen als im Wesentlichen senkrecht zu der Gasströmungsrichtung der Gasströmung verlaufende Spalten ausgebildet werden, und wobei eine Ausdehnung der jeweiligen Spalte parallel zu der Gasströmungsrichtung der Gasströmung derart definiert wird, dass jede der Spalten eine gleiche Anzahl und/oder eine gleiche Länge an Bearbeitungs-Vektoren und/oder eine gleiche rechnerische Belichtungszeit aufweist.
23. Steuerverfahren nach einem der vorhergehenden Beispiele, wobei wenigstens eine Sektion so in Flächenstücke aufgeteilt wird, dass eine gleiche Anzahl von für das zu verfestigende Material in jedem Flächenstück nutzbaren Strahlen zum Belichten des Flächenstücks und/oder eine im Wesentlichen gleiche Anzahl an Vektoren in jedem Flächenstück und/oder eine im Wesentlichen gleiche Summe der Länge der Vektoren in jedem Flächenstück und/oder eine im Wesentlichen gleiche Belichtungszeit in jedem Flächenstück erreicht wird.
24. Steuerverfahren nach einem der vorhergehenden Beispiele, wobei in wenigstens einer Sektion jedem der Strahlen, dem in der Sektion wenigstens ein Flächenstück zugewiesenen wurde, eine gleiche Anzahl und/oder Gesamtlänge an Vektoren und/oder eine gleiche Belichtungszeit und/oder eine gleiche Anzahl Flächenstücke zugewiesen wird.
25. Steuerverfahren nach einem der vorhergehenden Beispiele, ferner umfassend:
   Bestimmen, basierend auf einer Bestrahlung des zu verfestigenden Materials in der Schicht in einem ersten Flächenstück mit einem der Strahlen, eines Bereiches mit Bezug auf die Oberfläche des Trägers, in welchem ein Auftreten von Schmauch und/oder Spritzern, die durch die Bestrahlung in dem ersten Flächenstück entstehen, erwartet wird, und
   Bestimmen, basierend auf dem Bereich, in welchem das Auftreten von Schmauch und/oder der Spritzer erwartet wird, ob ein zweites Flächenstück durch den Strahl oder einen anderen Strahl bestrahlt werden kann.
26. Steuerverfahren nach einem der vorhergehenden Beispiele, wobei die Strahlen Laserstrahlen umfassen, insbesondere wobei alle Strahlen Laserstrahlen sind.
27. Steuerverfahren nach Beispiel 26, wobei alle Laserstrahlen eine im Wesentlichen gleiche Wellenlänge und/oder eine im Wesentlichen gleiche Leistung und/oder eine gleiche, insbesondere punktförmige, Form der Auftreffstelle aufweisen.
28. Steuerverfahren nach Beispiel 26, wobei die Strahlen wenigstens zwei Laserstrahlen umfassen, welche eine unterschiedliche Wellenlänge und/oder eine unterschiedliche Leistung und/oder eine unterschiedliche Form der Auftreffstelle aufweisen.
29. Computerprogramm, das in eine programmierbare Steuerungseinrichtung ladbar ist, mit einem Programmcode, um zumindest einen Teil eines Steuerverfahrens gemäß einem der Beispiele 1 bis 28 auszuführen, wenn das Computerprogramm auf der Steuerungseinrichtung ausgeführt wird.
30. Datenträger, der das Computerprogramm nach Beispiel 29 enthält, wobei der Datenträger ein elektrisches Signal, ein optisches Signal, ein Funksignal oder computerlesbares Speichermedium umfasst.
31. Steuerungseinrichtung zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens, wobei die Steuerungseinrichtung umfasst:
   einen oder mehrere Prozessoren; und
   einen Speicher, der Anweisungen enthält, die von dem einen oder den mehreren Prozessoren ausführbar sind, wodurch die Steuerungseinrichtung betreibbar ist, um zumindest Teil (d) des Verfahrens nach einem der Beispiele 1 bis 28 durchzuführen.
32. Herstellungsvorrichtung zur Herstellung eines dreidimensionalen Werkstücks mittels eines generativen Schichtbauverfahrens, wobei die Herstellungsvorrichtung umfasst:
   eine Multistrahlenvorrichtung mit einer oder mehreren Strahlenquellen zur Erzeugung mehrerer Strahlen; und
   die Steuerungseinrichtung nach Beispiel 31.

## Patentansprüche

1. Steuerverfahren zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens, bei dem ein verfestigbares Material zur Herstellung des dreidimensionalen Werkstücks schichtweise auf einer Oberfläche eines Trägers aufgebracht wird und das verfestigbare Material in einer jeweiligen Schicht an jeweiligen Auftreffstellen der mehreren Strahlen auf dem verfestigbaren Material durch die mehreren Strahlen verfestigt wird,
wobei die Auftreffstellen der Strahlen zur Verfestigung selektiver Bereiche einer der Schichten des verfestigbaren Materials zur Herstellung des dreidimensionalen Werkstücks jeweils im Wesentlichen entgegen einer Gasströmungsrichtung einer Gasströmung über die Oberfläche des Trägers gesteuert werden;
wobei das Steuerverfahren umfasst:
(a) Unterteilen des zu verfestigenden Materials in der jeweiligen Schicht in mindestens zwei Sektionen, wobei sich zwei der mindestens zwei Sektionen in Gasströmungsrichtung zumindest teilweise hintereinander erstrecken,
(b) Unterteilen mindestens einer der zwei der mindestens zwei Sektionen in mindestens zwei Flächenstücke,
(c) Zuweisen jedes der Flächenstücke zu genau einem bestimmten Strahl, der das zu verfestigende Material in dem zugewiesenen Flächenstück verfestigt,
(d) Steuern der Auftreffstellen der Strahlen derart, dass die Auftreffstellen der Strahlen in einer Lagebeziehung zueinander stehen und die Auftreffstellen der Strahlen in wenigstens zwei Flächenstücken gleichzeitig belichtet werden.

2. Steuerverfahren nach Anspruch 1, wobei die Auftreffstellen der Strahlen zumindest teilweise kontinuierlich über die Oberfläche des Trägers gesteuert werden.

3. Steuerverfahren nach Anspruch 1 oder 2, wobei sich mindestens zwei der Auftreffstellen der Strahlen für mindestens eine vorbestimmte Dauer außerhalb eines vorbestimmten Abstandes zueinander befinden.

4. Steuerverfahren nach Anspruch 1 oder 2, wobei sich mindestens zwei der Auftreffstellen der Strahlen für mindestens eine vorbestimmte Dauer innerhalb eines Unbehelligungsabstandes in Gasströmungsrichtung hintereinander zueinander befinden.

5. Steuerverfahren nach einem der vorhergehenden Ansprüche, wobei die Auftreffstellen der Strahlen derart gesteuert werden, dass zu wenigstens einem Zeitpunkt einer Belichtung des zu verfestigenden Materials das zu verfestigende Material in wenigstens zwei Flächenstücken verfestigt wird, und ein Netz aus zwischen den Auftreffstellen zu jeden anderen Auftreffstellen verlaufender Geraden zu keinem Zeitpunkt der Belichtung, in dem sich alle Auftreffstellen außerhalb eines vorbestimmten Abstandes zueinander befinden, eine Gerade parallel der Gasströmungsrichtung der über den zwei der mindestens zwei Sektionen vorherrschenden Gasströmung aufweist.

6. Steuerverfahren nach einem der vorhergehenden Ansprüche, wobei vor der Zuweisung der Flächenstücke zu genau einem bestimmten Strahl, jedes der Flächenstücke durch dessen Lage zur Oberfläche des Trägers und/oder zu einem Gasstromauslass der Gasströmung einem oder mehreren bestimmten Strahlen der mehreren Strahlen zugeordnet wird.

7. Steuerverfahren nach einem der vorhergehenden Ansprüche, wobei eine Lage und/oder eine Ausdehnung der Sektionen auf der Oberfläche des Trägers und/oder eine Anzahl der Sektionen definiert werden basierend auf:
einer Ausdehnung und/oder Lage des dreidimensionalen Werkstücks in der Schicht des verfestigbaren Materials, und/oder
einer Lage von Scanfeldern der Strahlen, die über Punkte senkrechter Strahleneinfälle und eine Ausdehnung mit Bezug auf die Oberfläche des Trägers und/oder einen Winkel zur Achse des jeweiligen senkrechten Strahleinfalls konfiguriert werden.

8. Steuerverfahren nach einem der vorhergehenden Ansprüche, wobei alle Sektionen in Richtung senkrecht zur Gasströmungsrichtung der Gasströmung mit derselben Ausdehnung definiert werden und/oder alle Sektionen parallel zur Gasströmungsrichtung der Gasströmung mit derselben Ausdehnung definiert werden.

9. Steuerverfahren nach einem der vorhergehenden Ansprüche, wobei die Belichtung eines jeden Flächenstücks in einer zweiten Sektion, welche sich in Gasströmungsrichtung wenigstens teilweise vor einer anderen ersten Sektion erstreckt, erst begonnen wird, nachdem das zu verfestigende Material aller Flächenstücke der ersten Sektion vollständig bestrahlt wurde.

10. Steuerverfahren nach einem der vorhergehenden Ansprüche, wobei eine jede Auftreffstelle so gesteuert wird, dass diese sich nicht in Gasströmungsrichtung außerhalb eines Abführungsabstandes zu einer Stelle befindet, an welcher das zu verfestigende Material der jeweiligen Schicht bereits bestrahlt wurde.

11. Steuerverfahren nach einem der vorhergehenden Ansprüche, wobei eine Anzahl von Flächenstücken, in die die entsprechende Sektion unterteilt wird, basierend auf einer Ausdehnung der Sektion senkrecht zur Gasströmungsrichtung der Gasströmung und/oder einer Lage der Sektion in der Schicht des verfestigbaren Materials definiert wird oder eine Anzahl von Flächenstücken in einer Sektion durch eine Anzahl der maximal zum gleichen Zeitpunkt in der Sektion belichtenden Strahlen oder deren Vielfaches definiert wird.

12. Steuerverfahren nach einem der vorhergehenden Ansprüche, wobei die Sektionen im Wesentlichen in gleich große Flächenstücke unterteilt werden.

13. Steuerverfahren nach einem der Ansprüche 1 bis 12, wobei das Unterteilen des zu verfestigenden Materials der Schicht auf einer den jeweiligen Strahlen zugeordneten, insbesondere im Wesentlichen gleichverteilten, Belichtungszeit, basiert, und/oder wobei jedes der Flächenstücke, das einem bestimmten Strahl der mehreren Strahlen zugeordnet ist, in mehrere Bestrahlungsfelder basierend auf einem Strahlendurchmesser des bestimmten Strahls aufgeteilt wird.

14. Computerprogramm, das in eine programmierbare Steuerungseinrichtung ladbar ist, mit einem Programmcode, um zumindest einen Teil eines Steuerverfahrens gemäß einem der Ansprüche 1 bis 13 auszuführen, wenn das Computerprogramm auf der Steuerungseinrichtung ausgeführt wird.

15. Steuerungseinrichtung zur Steuerung einer Multistrahlenvorrichtung mit einer oder mehreren Strahlenquellen zur Erzeugung mehrerer Strahlen einer Anlage zur Herstellung eines dreidimensionalen Werkstücks mittels eines generativen Schichtbauverfahrens, wobei die Steuerungseinrichtung umfasst:
einen oder mehrere Prozessoren; und
einen Speicher, der Anweisungen enthält, die von dem einen oder den mehreren Prozessoren ausführbar sind, wodurch die Steuerungseinrichtung betreibbar ist, um das Verfahren nach einem der Ansprüche 1 bis 13 durchzuführen.
